(19) Europäisches Patentamt
European Patent Office
Office européen des brevets

(11) **EP 1 799 484 B1**

(12) **EUROPÄISCHE PATENTSCHRIFT**

(45) Veröffentlichungstag und Bekanntmachung des Hinweises auf die Patenterteilung:
**22.02.2012 Patentblatt 2012/08**

(21) Anmeldenummer: **05801668.4**

(22) Anmeldetag: **13.10.2005**

(51) Int Cl.:
*B60K 28/16* (2006.01)      *B60K 23/04* (2006.01)
*B60T 8/32* (2006.01)      *B60W 10/12* (2012.01)
*B60W 10/18* (2012.01)

(86) Internationale Anmeldenummer:
**PCT/EP2005/055238**

(87) Internationale Veröffentlichungsnummer:
**WO 2006/040343 (20.04.2006 Gazette 2006/16)**

(54) **VERFAHREN UND VORRICHTUNG ZUM STEUERN DES SPERRGRADES EINER ELEKTRONISCH STEUERBAREN DIFFERENZIALSPERRE**

METHOD AND DEVICE FOR CONTROLLING THE LOCKING DEGREE OF AN ELECTRONICALLY CONTROLLABLE DIFFERENTIAL LOCK

PROCEDE ET DISPOSITIF POUR REGLER LE DEGRE DE VERROUILLAGE D'UN SYSTEME DE VERROUILLAGE DE DIFFERENTIEL A COMMANDE ELECTRONIQUE

(84) Benannte Vertragsstaaten:
**DE FR**

(30) Priorität: 14.10.2004 DE 102004050307
13.10.2005 DE 102005049397

(43) Veröffentlichungstag der Anmeldung:
**27.06.2007 Patentblatt 2007/26**

(73) Patentinhaber: **Continental Teves AG & Co. oHG
60488 Frankfurt am Main (DE)**

(72) Erfinder:
• **RASTE, Thomas
61440 Oberursel (DE)**
• **BAUER, Roger
60326 Frankfurt am Main (DE)**

(56) Entgegenhaltungen:
WO-A-02/081279      DE-A1- 3 714 330
DE-A1- 4 030 653      DE-A1- 10 245 035
DE-A1- 10 248 090      DE-A1- 10 303 984
DE-A1- 10 338 656      DE-A1- 19 515 051
US-A1- 2003 125 148

**Beschreibung**

Die Erfindung betrifft ein Verfahren zum Steuern des Sperrgrades einer elektronisch steuerbaren Differenzialsperre in einer angetriebenen Achse eines Fahrzeugs.

Die Erfindung betrifft zudem eine Vorrichtung zum Steuern eines Sperrgrades einer elektronisch steuerbaren Differenzialsperre in einer angetriebenen Achse eines Fahrzeugs.

Elektronische steuerbare Differenzialsperren verfügen üblicherweise über Kupplungen, mit denen das offene Differenzial einer angetriebenen Achse eines Fahrzeugs gesperrt werden kann. Der Sperrgrad wird mit Hilfe einer elektronischen Regelung ermittelt, um die Traktion und die Fahrstabilität eines Fahrzeugs zu verbessern.

Ein Verfahren der eingangs genannten Art ist bereits aus der Patentschrift DD 294 078 A5 bekannt. Bei dem bekannten Verfahren wird eine Radgeschwindigkeitsdifferenz zwischen den Rädern an der angetriebenen Achse einem geschwindigkeitsabhängigen Sollwert nachgeregelt, um den Einfluss von Störgrößen, wie beispielsweise einer Veränderung der Reibwerte der Fahrbahn oder einer Veränderung der Radlast, auszugleichen.

Ferner ist es bekannt, die Fahrstabilität eines Fahrzeugs durch Fahrdynamikregelungen, wie beispielsweise das so genannte Elektronische Stabilitätsprogramm, zu erhöhen. Mittels eines Fahrdynamikreglers werden dabei insbesondere radindividuelle Bremskräfte ermittelt und an den Rädern des Fahrzeugs eingestellt, wodurch ein auf das Fahrzeug wirkendes Giermoment erzeugt wird, welches den Fahrzustand des Fahrzeugs stabilisiert.

Es hat sich dabei gezeigt, dass derartige Bremseneingriffe, die an einem Rad an der angetriebenen Achse des Fahrzeugs vorgenommen werden, eine stark verminderte Wirksamkeit haben, wenn ein von Null verschiedener Sperrgrad in der elektronischen Differenzialsperre in der angetriebenen Achse des Fahrzeugs eingestellt ist. Die im Rahmen der Fahrdynamikregelung durchgeführten Bremseingriffe sowie die Steuerung des Sperrgrades der Differenzialsperre stören sich in diesem Falle gegenseitig.

Aus der DE 102 48 090 A und aus der DE 103 03 984 A ist das Abschalten der Differenzialsperre bei einem Fahrdynamik-Eingriff bekannt. Außerdem ist auch eine Vorrichtung, bei der das Differenzial bei einem Fahrdynamik-Eingriff entsperrt wird, bekannt. Durch diese Maßnahme wird ein Sperrgrad von Null eingestellt.

Es ist eine Aufgabe der vorliegenden Erfindung, die Bremseingriffe bei einer Fahrdynamikregelung sowie die Steuerung des Sperrgrades einer elektronisch steuerbaren Differenzialsperre so aneinander anzupassen, dass eine bestmögliche Stabilisierung des Fahrzustandes des Fahrzeugs erreicht wird.

Erfindungsgemäß wird diese Aufgabe durch ein Verfahren mit den Merkmalen des Patentanspruchs 1 sowie durch eine Vorrichtung mit den Merkmalen des Patentanspruchs 12 gelöst. Vorteilhafte Weiterbildungen des Verfahrens und der Vorrichtung sind Gegenstand der Patentansprüche 2 bis 11 sowie 13 bis 16.

Die Erfindung sieht insbesondere vor, dass ein Verfahren der eingangs genannten Art so durchgeführt wird, überprüft wird, ob ein Antriebsrad an der angetriebenen Achse durch einen Fahrdynamikregler gesteuert abgebremst wird, und dass ein Sperrgrad von Null in der Differenzialsperre eingestellt wird, wenn festgestellt wird, dass ein Antriebsrad an der angetriebenen Achse durch den Fahrdynamikregler gesteuert abgebremst wird, und wobei solange kein Bremseingriff an einem Antriebsrad des Fahrzeugs vorgenommen wird, bis der Fahrzustand durch eine Ansteuerung der Differenzialsperre stabilisiert wird, dergestalt, dass in einer Übersteuersituation ein Sperrgrad von Null in der Differenzialsperre eingestellt wird, wenn zusätzlich erkannt wird, dass ein Pedalweg, um den ein Fahrpedal des Fahrzeugs eingetreten ist, größer ist als ein vorgegebener Fahrpedalschwellenwert und dass in einer Übersteuersituation ein von Null verschiedener Sperrgrad in der Differenzialsperre eingestellt wird, wenn zusätzlich erkannt wird, dass ein Pedalweg, um den ein Fahrpedal des Fahrzeugs eingetreten ist, kleiner oder gleich ist als ein vorgegebener Fahrpedalschwellenwert.

Ferner ist vorgesehen, dass eine Vorrichtung zum Steuern eines Sperrgrades einer elektronisch steuerbaren Differenzialsperre in einer angetriebenen Achse eines Fahrzeugs, umfassend eine Regeleinheit, in der ein Sperrgrad der Differenzialsperre bestimmbar ist, einen Fahrdynamikregler, mittels welchem ein Rad des Fahrzeugs mit einer Bremskraft beaufschlagbar ist, wobei eine Bewertungseinheit vorgesehen ist, in der überprüfbar ist, ob ein Antriebsrad an der angetriebenen Achse durch einen Fahrdynamikregler gesteuert abgebremst wird, und dass die Bewertungseinheit einen Sperrgrad von Null in der Differenzialsperre einstellt, wenn ein Antriebsrad an der angetriebenen Achse durch den Fahrdynamikregler gesteuert abgebremst wird und wobei solange kein Bremseingriff an einem Antriebsrad des Fahrzeugs vorgenommen wird, bis der Fahrzustand durch eine Ansteuerung der Differenzialsperre stabilisiert wird, dergestalt, dass die Bewertungseinheit in einer Übersteuersituation einen Sperrgrad von Null in der Differenzialsperre einstellt, wenn zusätzlich erkannt wird, dass ein Pedalweg, um den ein Fahrpedal des Fahrzeugs eingetreten ist, größer ist als ein vorgegebener Fahrpedalschwellenwert und dass die Bewertungseinheit in einer Obersteuersituation einen von Null verschiedenen Sperrgrad berechnet und in der Differenzialsperre einstellt, wenn zusätzlich erkannt wird, dass ein Pedalweg, um den ein Fahrpedal des Fahrzeugs eingetreten ist, kleiner oder gleich ist als ein vorgegebener Fahrpedalschwellenwert..

Es wird nur dann ein von Null verschiedener Sperrgrad in der elektronisch steuerbaren Differenzialsperre eingestellt, wenn kein durch einen Fahrdynamikregler gesteuerter Bremseingriff an einem Antriebsrad des Fahrzeugs vorgenommen wird. Hierdurch wird verhindert, dass die Wirksamkeit des durch den Fahrdynamikregler gesteuerten Bremseneingriffs dadurch beeinträchtigt wird, dass in der Differenzialsperre ein von Null verschiedener Sperrgrad eingestellt ist.

In bestimmten Situationen kann der Fahrzustand des Fahrzeugs jedoch durch eine entsprechende Ansteuerung der Differenzialsperre stabilisiert werden, solange kein Bremseneingriff an einem Antriebsrad des Fahrzeugs vorgenommen wird. Dabei wurde festgestellt, dass eine Stabilisierung des Fahrzustandes des Fahrzeugs insbesondere in einer Obersteuersituation durch das Einstellen eines von Null verschiedenen Sperrgrades in der Differenzialsperre erreicht werden kann. Hierdurch wird die Antriebskraft an dem kurveninneren Antriebsrad des Fahrzeugs, welches eine geringere Raddrehzahl aufweist als das kurvenäußere Rad, erhöht, wodurch ein Giermoment erzeugt wird, welches dem Übersteuern des Fahrzeugs entgegenwirkt.

Es ist daher vorgesehen, dass mittels einer Regeleinheit ein von Null verschiedener Sperrgrad berechnet wird und dass der von Null verschiedene Sperrgrad in der Differenzialsperre eingestellt wird, wenn eine Übersteuersituation erkannt wird. Außerdem wird in einer Obersteuersituation ein Sperrgrad von Null in der Differenzialsperre eingestellt, wenn zusätzlich erkannt wird, dass ein Pedalweg, um den ein Fahrpedal des Fahrzeugs eingetreten ist, größer ist als ein vorgegebener Fahrpedalschwellenwert.

In einer zweckmäßigen Ausführungsform der Erfindung ist vorgesehen, dass eine Übersteuersituation erkannt wird, wenn folgende Bedingungen erfüllt sind:

- Eine Fahrzeuggeschwindigkeit ist größer als ein vorgegebener Schwellenwert,
- ein Vorzeichen eines Lenkwinkels an einem lenkbaren Rad des Fahrzeugs entspricht dem Vorzeichen einer Differenz $\dot{\psi}-\dot{\psi}_{Soll}$ zwischen einer gemessenen Gierrate $\dot{\psi}$ des Fahrzeugs und einer in einem Fahrzeugreferenzmodell ermittelten Soll-Gierrate $\dot{\psi}_{Soll}$ und
- der Betrag der Differenz $\dot{\psi}-\dot{\psi}_{Soll}$ zwischen der gemessenen Gierrate $\dot{\psi}$ des Fahrzeugs und der in einem Fahrzeugreferenzmodell ermittelten Soll-Gierrate $\dot{\psi}_{Soll}$ ist größer als ein vorgegebener erster Gierratenabweichungsschwellenwert.

In einer weiteren vorteilhaften Ausführungsform des erfindungsgemäßen Verfahrens und der erfindungsgemäßen Vorrichtung ist es vorgesehen, dass der Sperrgrad der Differenzialsperre mittels der Regeleinheit in Abhängigkeit von einer Differenz zwischen Raddrehzahlen der Antriebsräder des Fahrzeugs ermittelt wird.

In einer gleichfalls vorteilhaften Ausführungsform des erfindungsgemäßen Verfahrens und der erfindungsgemäßen Vorrichtung ist es vorgesehen, dass der Sperrgrad der Differenzialsperre mittels der Regeleinheit in Abhängigkeit von einer Differenz zwischen einer gemessenen Gierrate des Fahrzeugs und einer in einem Fahrzeugreferenzmodell anhand eines von dem Fahrer eingestellten Lenkwinkels an dem lenkbaren Rad des Fahrzeugs und einer von dem Fahrer des Fahrzeugs eingestellten Fahrzeuggeschwindigkeit ermittelten Soll-Gierrate bestimmt wird.

Darüber hinaus hat sich gezeigt, dass die Fahrstabilität des Fahrzeugs in einer Übersteuersituation, in welcher der Fahrer des Fahrzeugs ein hohes Antriebsmoment von einem Antriebsmotor des Fahrzeugs anfordert und das Fahrzeug beschleunigt, erhöht werden kann, wenn ein Sperrgrad von Null in der Differenzialsperre eingestellt wird. In einer derartigen Situation liegt an dem kurveninneren Antriebsrad in der Regel ein erhöhter Radschlupf vor, so dass die an diesem Rad aufbaubare Seitenführungskraft verringert ist. Durch das Einstellen eines von Null verschiedenen Sperrgrades in der Differenzialsperre würde in einer derartigen Situation die Antriebskraft an dem kurvenäußeren Rad erhöht werden. Hierdurch würde der Radschlupf an diesem Rad vergrößert werden, so dass auch die an diesem Rad aufbaubare Seitenführungskraft verringert werden würde, und infolgedessen die Gefahr bestünde, dass das Fahrzeug ausbricht.

In einer bevorzugten Ausführungsform des erfindungsgemäßen Verfahrens und der erfindungsgemäßen Vorrichtung ist es daher vorgesehen, dass in einer Übersteuersituation ein Sperrgrad von Null in der Differenzialsperre eingestellt wird, wenn eine Schräglaufwinkeldifferenz zwischen einem Schräglaufwinkel an einem Vorderrad und an einem Hinterrad des Fahrzeugs bei Vorliegen einer positiven Gierrate des Fahrzeugs größer als ein vorgegebener positiver Übersteuerschwellenwert ist oder wenn die Schräglaufwinkeldifferenz bei Vorliegen einer negativen Gierrate des Fahrzeugs kleiner als ein vorgegebener negativer Übersteuerschwellenwert ist.

Vorteilhaft wird die zuvor dargestellte Übersteuersituation, in welcher das Fahrzeug von dem Fahrer in Vorwärtsrichtung beschleunigt wird, in Abhängigkeit eines Vergleichs zwischen der Schräglaufwinkeldifferenz und einem Übersteuerschwellenwert erkannt und bewertet. Es konnte dabei festgestellt werden, dass derartige Situationen anhand dieses Vergleichs besonders zuverlässig erkannt werden können.

Eine zweckmäßige Ausführungsform des erfindungsgemäßen Verfahrens und der erfindungsgemäßen Vorrichtung zeichnet sich dabei dadurch aus, dass der positive und der negative Übersteuerschwellenwert den gleichen Betrag aufweisen.

Weiterhin ist es in einer zweckmäßigen Ausführungsform des erfindungsgemäßen Verfahrens und der erfindungsgemäßen Vorrichtung vorgesehen, dass die Schräglaufwinkeldifferenz $\Delta\alpha$ aus einem Lenkwinkel $\delta_{wheel}$ eines lenkbaren Rades des Fahrzeugs, einer Geschwindigkeit $v_{ref}$ des Fahrzeugs, einer Gierrate $\dot{\psi}$ des Fahrzeugs und einem Radstand *l* des Fahrzeugs bestimmt wird, wobei gilt:

$$\Delta\alpha = -\delta_{wheel} + \frac{l}{v_{ref}}\dot{\psi}$$

Weiterhin zeichnet sich eine vorteilhafte Ausführungsform des erfindungsgemäßen Verfahrens und der erfindungsgemäßen Vorrichtung dadurch aus, dass in einer Übersteuersituation ein Sperrgrad von Null in der Differenzialsperre eingestellt wird, wenn zusätzlich erkannt wird, dass der Betrag des Lenkwinkels an dem lenkbaren Rad des Fahrzeugs größer als ein vorgegebener Lenkwinkelschwellenwert ist.

Darüber hinaus ist es in einer bevorzugten Ausführungsform des erfindungsgemäßen Verfahrens und der erfindungsgemäßen Vorrichtung vorgesehen, dass ein Rad des Fahrzeugs durch einen Fahrdynamikregler gesteuert abgebremst wird, wenn in einer Obersteuersituation festgestellt wird, dass der Betrag der Differenz $\dot{\psi}$-$\dot{\psi}_{Soll}$ zwischen der gemessenen Gierrate $\dot{\psi}$ des Fahrzeugs und der in einem Fahrzeugreferenzmodell ermittelten Soll-Gierrate $\dot{\psi}_{soll}$ größer als ein vorgegebener zweiter Gierratenabweichungsschwellenwert ist.

In einer vorteilhaften Ausführungsform des erfindungsgemäßen Verfahrens und der erfindungsgemäßen Vorrichtung ist es vorgesehen, dass der zweite Gierratenabweichungsschwellenwert größer als der erste Gierratenabweichungsschwellenwert ist.

Somit erfolgt ein durch den Fahrdynamikregler gesteuerter Bremseneingriff in einer Übersteuersituation vorteilhaft erst dann, wenn er Betrag der Differenz $\dot{\psi}$-$\dot{\psi}_{Soll}$ zwischen der gemessenen Gierrate $\dot{\psi}$ des Fahrzeugs und der in einem Fahrzeugreferenzmodell ermittelten Soll-Gierrate $\dot{\psi}_{Soll}$ einen zweiten Gierratenabweichungsschwellenwert überschreitet, welcher größer als der erste Gierratenabweichungsschwellenwert ist. Insbesondere kann das Fahrzeug dabei in einer Übersteuersituation durch eine in der zuvor dargestellten Weise erfolgende Ansteuerung der Differenzialsperre stabilisiert werden, bevor ein Bremseneingriff vorgenommen wird. In vielen Fällen kann dabei der Bremseneingriff, der von dem Fahrer als sehr unkomfortabel wahrgenommen wird, vermieden und das Fahrzeug durch bereits durch eine geeignete Ansteuerung der Differenzialsperre stabilisiert werden.

Ferner ist es in einer vorteilhaften Ausführungsform des erfindungsgemäßen Verfahrens und der erfindungsgemäßen Vorrichtung vorgesehen, dass der Fahrdynamikregler in einer Obersteuersituation das Abbremsen eines kurvenäußeren Vorderrades steuert.

Hierdurch kann das Fahrzeug im Falle eines übersteuerns besonders wirkungsvoll stabilisiert werden. Insbesondere bei Fahrzeugen mit Vorradantrieb ist es dabei jedoch vorgesehen, die Differenzialsperre während des Bremseingriffs zu öffnen, um das Fahrzeug bestmöglich stabilisieren zu können. Würde in einer während eines Bremseineingriffs an einem Antriebsrad des Fahrzeugs in einer Übersteuersituation ein von Null verschiedener Sperrgrad in der Differenzialsperre eingestellt werden, dass würde gleichzeitig mit dem kurvenäußeren Antriebsrad auch das kurveninnere Antriebsrad abgebremst und die Wirksamkeit des Bremseneingriffs wäre stark herabgemindert.

Vorzugsweise ist in einer Ausführungsform des erfindungsgemäßen Verfahrens und der erfindungsgemäßen Vorrichtung vorgesehen, dass die Regeleinheit in einem Steuergerät enthalten ist, wobei ein Einstellen des in der Regeleinheit ermittelten Soll-Sperrgrads in der Differenzialsperre mittels der Bewertungseinheit blockierbar ist, wodurch ein Sperrgrad von Null in der elektronisch steuerbaren Differenzialsperre einstellbar ist.

Vorzugsweise ist ferner in einer vorteilhaften Ausführungsform des erfindungsgemäßen Verfahrens und der erfindungsgemäßen Vorrichtung vorgesehen, dass die Bewertungseinheit ein Bestandteil eines Systems zur Durchführung eines elektronischen Stabilitätsprogramms ist.

Weiterhin ist in einer vorteilhaften Ausführungsform des erfindungsgemäßen Verfahrens und der erfindungsgemäßen Vorrichtung vorgesehen, dass die Regeleinheit und die Bewertungseinheit Bestandteil eines Systems zur Durchführung eines elektronischen Stabilitätsprogramms sind.

Eine gleichfalls vorteilhafte Ausführungsform des erfindungsgemäßen Verfahrens und der erfindungsgemäßen Vorrichtung zeichnete sich dadurch aus, dass der Fahrdynamikregler ein Bestandteil eines Systems zur Durchführung eines elektronischen Stabilitätsprogramms ist.

Weitere Vorteile, Besonderheiten und zweckmäßige Weiterbildungen der Erfindung ergeben sich aus den Unteransprüchen und der nachfolgenden Darstellung bevorzugter Ausführungsformen der Erfindung anhand der Figuren.

Von den Figuren zeigt

Fig. 1    ein Blockschaltbild mit einer Vorrichtung zur Ansteuerung einer elektronischen Differenzialsperre,

Fig. 2    ein Blockschaltbild eines ESP-Systems mit einem integrierten Modul zur Ansteuerung einer elektronischen Differenzialsperre,

Fig. 3    eine schematische Darstellung eines Fahrzeugs, in welcher Fahrzustandsgrößen des Fahrzeugs veranschaulicht sind,

Fig. 4    ein Zustandsdiagramm, in dem die Ansteuerung der elektronisch steuerbaren Differenzialsperre für ein Fahrzeug mit Hinterachsantrieb verdeutlicht ist und

Fig. 5    ein Zustandsdiagramm, in dem die Ansteuerung der elektronisch steuerbaren Differenzialsperre für ein Fahrzeug mit Vorderachsantrieb verdeutlicht ist.

Die Erfindung bezieht sich auf ein Fahrzeug 101, bei dem es sich beispielsweise um ein zweiachsiges, vierrädriges Kraftfahrzeug handelt, das von einem Antriebsmotor 102 angetrieben wird, der ein Drehmoment erzeugt, welches auf eine der Achsen, übertragen wird. Durch eine Betätigung eines Fahrpedals fordert der Fahrer des Fahrzeugs 101 dabei ein bestimmtes Antriebsmoment von dem Antriebsmotor 102 des Fahrzeugs 101 an.

Die angetriebenen Räder an der Antriebsachse sind durch ein elektronisch steuerbares Sperrdifferenzial miteinander verbunden. Hierbei handelt es sich um ein Differenzialgetriebe, das mittels einer elektronisch ansteuerbaren Differenzialsperre 103 gesperrt werden kann, die im Folgenden kurz als Differenzialsperre 103 bezeichnet wird. Der Sperrgrad der Differenzialsperre, deren Sperrwirkung beispielsweise mittels einer elektronisch steuerbaren Kupplung erzeugt wird, ist dabei vorzugsweise stufenlos einstellbar.

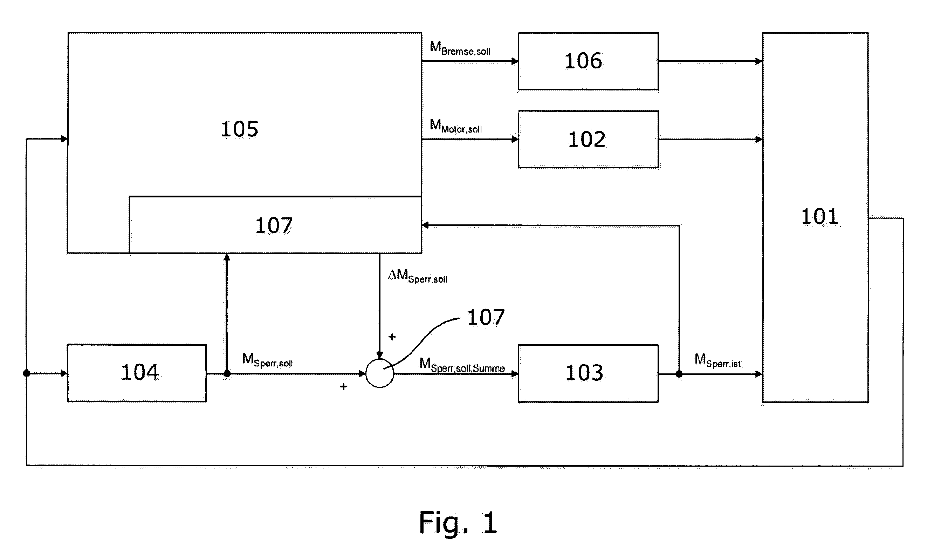

Bei einer Ausführungsform der Erfindung, die in Figur 1 anhand eines Blockschaltbildes veranschaulicht wird, wird der Sperrgrad der Differenzialsperre 103 insbesondere durch ein Steuergerät 104 ermittelt, welches eine elektronische Regeleinheit zum Ermitteln des Soll-Sperrgrades enthält. Dabei wird beispielhaft davon ausgegangen, dass der Soll-Sperrgrad in dem Steuergerät 104 in Form eines Soll-Sperrmoments $M_{Sperr,soll}$ der die Sperrwirkung erzeugenden Kupplung bestimmt wird. Es kann jedoch gleichfalls vorgesehen sein, dass anstelle des Soll-Sperrmoments $M_{Sperr,soll}$ ein Soll-Sperrgrad der Differenzialsperre 103 oder eine Soll-Steifigkeit des Differenzialgetriebes bestimmt wird. Das in der Differenzialsperre 103 vorliegende Sperrmoment wird in der Figur 1 mit $M_{Sperr,\ ist}$ bezeichnet.

Die Regeleinheit des Steuergerätes 104 ist dabei in einer dem Fachmann an sich bekannten Art ausgeführt. Beispielsweise ermittelt die elektronische Regeleinheit das Soll-Sperrmoment $M_{Sperr,soll}$ so, dass eine Drehzahldifferenz der Antriebsräder einer geschwindigkeitsabhängigen Soll-Drehzahldifferenz nachgeregelt wird, wie es in der eingangs bereits erwähnten Patentschrift DD 294 078 A5 beschrieben ist. Die Raddrehzahldifferenz wird dabei aus den Raddrehzahlen der Antriebsräder ermittelt, die mittels eines Raddrehzahlsensors erfasst werden.

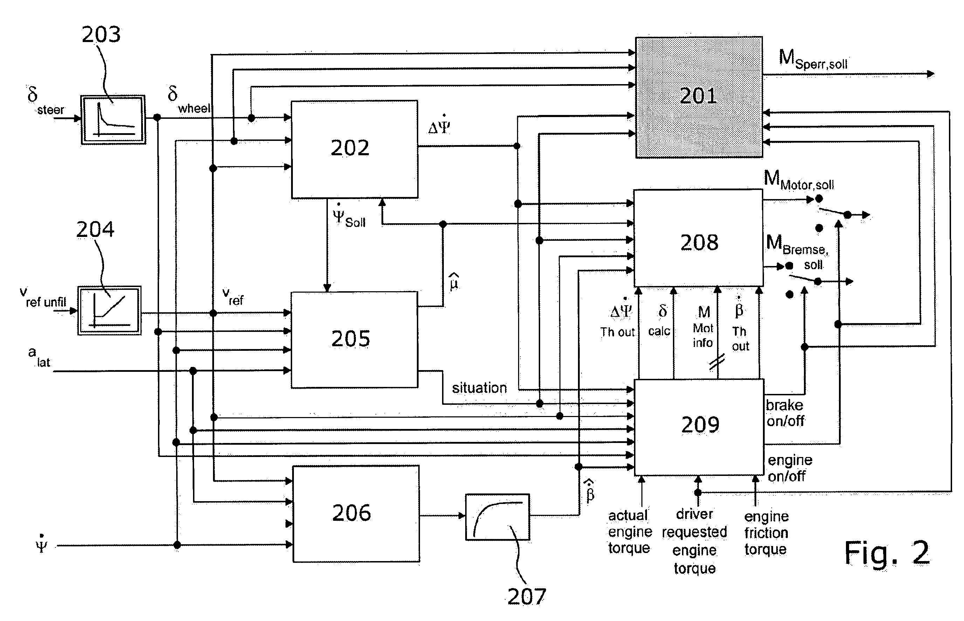

Ferner wird davon ausgegangen, dass das Fahrzeug 101 über ein System 105 zur Durchführung eines elektronischen Stabilitätsprogramms verfügt, welches im Folgenden als ESP-System 105 (ESP: Elektronisches Stabilitätsprogramm) bezeichnet wird. Zur Stabilisierung des Fahrzeugs 101 wird durch das ESP-System 105 insbesondere der Antriebsmotor 102 sowie eine fremdansteuerbare Bremsanlage 106 des Fahrzeugs 101 angesteuert. Das ESP-System verfügt dabei über ein Bewertungsmodul 107 zur Ansteuerung der Differenzialsperre 103, das eine Bewertungseinheit enthält, mittels welcher das Einstellen des in dem Steuergerät 104 ermittelten Soll-Sperrmoments $M_{Sperr,soll}$ in der Differenzialsperre 103 freigeschaltet bzw. blockiert wird. Dazu wird in dem Bewertungsmodul 107 ein Zusatzsperrmoment $\Delta M_{Sperr,soll}$ ermittelt, welches entweder den Wert 0 oder den Wert $-M_{Sperr,soll}$ annimmt. An der Summationsstelle 108 wird ein Summen-Soll-Sperrmoment $M_{Sperr,soll,Summe} = M_{Sperr,soll} + \Delta M_{Sperr,soll}$ gebildet, welches bei einem Wert von $\Delta M_{Sperr,soll} = 0$ dem in dem Steuergerät 104 ermittelten Soll-Sperrmoment $M_{Sperr,soll}$ entspricht, so dass dieses in der Differenzialsperre 103 eingestellt wird, und welches bei einem Wert von $\Delta M_{Sperr,soll} = -M_{Sperr,soll}$ den Wert 0 annimmt, so dass ein Sperrgrad von Null in der Differenzialsperre 103 eingestellt wird. Im Übrigen ist das ESP-System 105 in einer dem Fachmann an sich bekannten Art ausgeführt. Es wird im Folgenden anhand von Figur 2 im Zusammenhang mit einer weiteren Ausführungsform der Erfindung näher beschrieben.

Bei der weiteren Ausführungsform der Erfindung, die in der Figur 2 anhand eines Blockschaltbilds veranschaulicht wird, ist es vorgesehen, dass ein ESP-System ein Steuerungsmodul 201 zur Ansteuerung der Differenzialsperre 103 enthält, in dem ein Soll-Sperrmoment $M_{Sperr,soll}$ ermittelt wird, welches direkt in der Differenzialsperre 103 eingestellt wird.

Wie in der Figur 2 dargestellt, weist das ESP-System im Übrigen insbesondere ein Modul 202 auf, in dem anhand eines Fahrzeugreferenzmodells eine Sollgierrate $\dot{\psi}_{Soll}$ bzw. eine Gierratenabweichung $\Delta\dot{\psi} = \dot{\psi} - \dot{\psi}_{Soll}$ zwischen einer mittels eines Gierratensensors erfassten Ist-Gierrate $\dot{\psi}$ des Fahrzugs 101 und der Soll-Gierrate $\dot{\psi}_{Soll}$ berechnet wird. Vorzugsweise wird die Sollgierrate dabei in dem Modul 202 aus dem von dem Fahrer eingestellten Lenkwinkel $\delta_{wheel}$ der lenkbaren Räder 101 des Fahrzeugs sowie anhand einer von dem Fahrer eingestellten Fahrzeugreferenzgeschwindigkeit $v_{ref}$ und anhand eines Fahrzeugreferenzmodells berechnet, bei dem es sich beispielsweise um das bekannte lineare Einspurmodell handelt. Der Lenkwinkel $\delta_{wheel}$ wird dabei in dem Block 203 aus dem Lenkwinkel $\delta_{steer}$ ermittelt, welchen der Fahrer an einer Lenkvorrichtung des Fahrzeugs 101 einstellt und der mittels eines Lenkwinkelsensors gemessen wird. Die Fahrzeugreferenzgeschwindigkeit $v_{ref}$ wird in dem Block 204 aus einer ungefilterten Referenzgeschwindigkeit $v_{ref,unfil}$ ermittelt, die aus den Signalen von Raddrehzahlsensoren bestimmt wird.

In einer vorteilhaften Ausführungsform wird zudem eine Begrenzung der Soll-Gierrate $\dot{\psi}_{Soll}$ auf einen Maximalwert vorgenommen, der in Abhängigkeit von der Fahrzeugreferenzgeschwindigkeit $v_{ref}$, der aktuellen, aus der Fahrzeugreferenzgeschwindigkeit ermittelten Beschleunigung sowie einem Schätzwert $\hat{\mu}$ des aktuellen Fahrbahnreibwerts ermittelt wird, wie es beispielsweise in der deutschen Offenlegungsschrift DE 195 15 051 A1 beschrieben ist, auf die hiermit im Zusammenhang mit dem ESP-System Bezug genommen wird.

Der Schätzwert $\hat{\mu}$ wird in dem Modul 205 beispielsweise auf eine in der deutschen Offenlegungsschrift DE 195 15 051 A1 beschriebene Weise aus der mittels eines Querbeschleunigungssensors gemessenen Querbeschleunigung $a_{lat}$ des Fahrzeugs 101 sowie der beispielsweise aus den Signalen der Raddrehzahlsensoren bzw. der Fahrzeugreferenzgeschwindigkeit bestimmten Längsbeschleunigung des Fahrzeugs 101 berechnet. Ferner wird in dem Modul 205 eine Fahrsituationserkennung vorgenommen. Im Rahmen der Fahrsituationserkennung wird dabei beispielsweise ermittelt, ob sich das Fahrzeug 101 in einer Geradeausfahrt, in einer Kurvenfahrt, in einer Vorwärts-oder Rückwärtsfahrt oder im Stillstand befindet, wie dies ebenfalls in der deutschen Offenlegungsschrift DE 195 15 051 A1 beschrieben ist. Die dabei in dem Modul 205 verwendeten Eingangsgrößen sind die Istgierrate $\dot{\psi}$, die mittels eines Querbeschleunigungssensors gemessene Querbeschleunigung $a_{lat}$, die Fahrzeugreferenzgeschwindigkeit $v_{ref}$, sowie der Lenkwinkel $\delta_{wheel}$ an den lenkbaren Rädern.

Darüber hinaus werden in dem Modul 205 des ESP-Systems Übersteuersituationen und Untersteuersituation anhand der genannten Eingangsgrößen erkannt.

Eine Übersteuersituation wird dabei beispielsweise dann erkannt, wenn die Fahrzeugreferenzgeschwindigkeit größer als ein vorgegebener Schwellenwert ist, wenn das Vorzeichen des Lenkwinkels $\delta_{wheel}$ an den lenkbaren Rädern des Fahrzeugs 101 dem Vorzeichen der Gierratenabweichung $\Delta\dot{\psi}=\dot{\psi}-\dot{\psi}_{soll}$ entspricht und wenn der Betrag der Gierratenabweichung $\Delta\dot{\psi}=\dot{\psi}-\dot{\psi}_{soll}$ größer als ein vorgegebener erster Gierratenabweichungsschwellenwert ist.

Zur Erkennung einer Untersteuersituation ist es vorgesehen, einen Lenkwinkel $\delta_{calc}$ zu berechnen für den gilt:

$$\delta_{calc} = \frac{l\dot{\psi}}{v_{ref}} + K \cdot a_{lat}$$

Bei dem Koeffizienten $K$ handelt es sich dabei um einen vorgegebenen Untersteuerkoeffizienten. Ein Untersteuern des Fahrzeugs 101 wird dabei festgestellt, wenn die Differenz $|\delta_{wheel}|-|\delta_{calc}|$ einen vorgegebenen Schwellenwert überschreitet.

Ferner verfügt das ESP-System über ein Modul 206, in dem ein Schätzwert $\dot{\hat{\beta}}$ für die Schwimmwinkelgeschwindigkeit bestimmt wird. Dabei wird die Schwimmwinkelgeschwindigkeit vorzugsweise anhand der Ist-Gierrate $\dot{\psi}$, der Querbeschleunigung $a_{lat}$ sowie der Fahrzeugreferenzgeschwindigkeit $v_{ref}$ ermittelt, wie es in der deutschen Offenlegungsschrift DE 195 15 015 A1 beschrieben ist. Nach der Berechnung wird der ermittelte Wert durch ein Filter in dem Block 207 gefiltert.

Die in dem Modul 202 ermittelte Gierratenabweichung $\Delta\dot{\psi}$, der in dem Modul 205 ermittelte Schätzwert $\hat{\mu}$ für den Fahrbahnreibwert, die in demselben Modul ermittelten Ergebnisse der Fahrsituationserkennung, die Fahrzeugreferenzgeschwindigkeit $v_{ref}$, sowie der in dem Modul 206 ermittelte Schätzwert $\dot{\hat{\beta}}$ für die Schwimmwinkelgeschwindigkeit dienen als Eingangsgrößen für das Regelungsmodul 208 des ESP-Systems.

Das Regelungsmodul 208 enthält einen dem Fachmann an sich bekannten Fahrdynamikregler, mit dem ein Giermoment bestimmt wird, welches die Fahrstabilität des Fahrzeugs 101 erhöht und insbesondere einem Untersteuern oder einem Übersteuern des Fahrzeugs 101 entgegenwirkt. Der Fahrdynamikregler enthält dabei einen beispielsweise als Proportional-Differenzial-Regler ausgeführten Gierratenregler, dessen Reglerparameter adaptiv an ermittelte Größen, wie beispielsweise die Fahrzeuggeschwindigkeit $v_{ref}$ oder den vorliegenden Fahrbahnreibwert $\hat{\mu}$ sowie an die Ergebnisse der Fahrsituationserkennung angepasst werden können. Als Regeldifferenz wird dem Regler dabei die Gierratenabweichung $\Delta\dot{\psi}$ zugeführt. Als Stellgröße berechnet der Regler ein Giermoment, welches dazu geeignet ist, den Fahrzustand des Fahrzeugs 101 zu stabilisieren, bzw. die Gierratenabweichung $\Delta\dot{\psi}$ zu verringern. Darüber hinaus enthält das Regelungsmodul 208 einen Schwimmwinkelregler, in dem in Abhängigkeit von dem aus dem Schätzwert $\dot{\hat{\beta}}$ der Schwimmwinkelgeschwindigkeit berechneten Schwimmwinkel des Fahrzeugs 101 und/oder in Abhängigkeit von dem Schätzwert $\dot{\hat{\beta}}$ der Schwimmwinkelgeschwindigkeit selbst ein weiteres Giermoment berechnet wird, welches mit dem in dem Gierratenregler ermittelten Giermoment arbitriert wird.

Eine Verteilungslogik in dem Regelungsmodul 208 bestimmt aus dem in dieser Weise ermittelten Giermoment radindividuelle Bremsmomente $M_{Brems,soll}$, um das ermittelte Giermoment in dem Fachmann bekannter Weise durch ein gezieltes Abbremsen einzelner Räder des Fahrzeugs 101 zu erzeugen. In einer Übersteuersituation ist es dabei in der Regel vorgesehen, das kurvenäußere Vorderrad des Fahrzeugs 101 durch ein ermitteltes Bremsmoment $M_{Brems,soll}$ abzubremsen. In einer Untersteuersituation wird üblicherweise das kurveninnere Hinterrad des Fahrzeugs 101 durch ein ermitteltes Bremsmoment $M_{Brems,soll}$ abgebremst, um den Fahrzustand des Fahrzeugs 101 zu stabilisieren. Zudem wird in dem Regelungsmodul 208 ein Motormoment $M_{Motor,soll}$ ermittelt, welches an eine Motorsteuerung übertragen und mittels der Motorsteuerung in dem Antriebsmotor des Fahrzeugs 101 eingestellt wird, um die Stabilität des Fahrzustandes des Fahrzeugs 101 zu verbessern.

Die Bremsmomente $M_{Brems,soll}$ und das Motormoment $M_{Motor,soll}$ werden in dem Reglungsmodul 208 bei der in der Figur 2 dargestellten Ausführungsform des ESP-Systems fortlaufend berechnet. Die Freischaltung dieser Momente, die zu einem Einstellen der Bremsmomente $M_{Brems,soll}$ an den Radbremsen des Fahrzeugs 101, sowie zu einem Einstellen des Motormoments $M_{Motor,soll}$ in dem Antriebsmotor des Fahrzeugs 101 führt, wird, wie in der Figur 2 dargestellt, mittels eines Aktivierungsmoduls 209 des ESP-Systems vorgenommen.

In dem Aktivierungsmodul 209 wird eine Bewertung der erkannten Fahrsituation anhand der in der Figur 2 dargestellten Eingangsgrößen vorgenommen. Insbesondere wird die Fahrsituation dabei daraufhin bewertet, ob ein Bremseneingriff oder ein Motoreingriff vorgenommen werden soll. Dazu werden in dem Aktivierungsmodul 209 Vergleiche zwischen den erfassten und ermittelten Fahrzustandsgrößen und vorgegebenen Aktivierungsschwellenwerten durchgeführt, um zu ermitteln, ob ein Bremsen- oder Motoreingriff in einer in dem Modul 205 ermittelten Fahrsituation, insbesondere in einer Über- oder Untersteuersituation, durchgeführt werden soll.

Insbesondere ist es zur Aktivierung der ESP-Übersteuerfunktion, bei der ein ESP-Bremseneingriff vorgenommen wird, um einem Übersteuern des Fahrzeugs 101 entgegenzuwirken, vorgesehen, dass der Betrag der Gierratenabweichung $\Delta\dot{\psi}$ mit einem vorgegebenen zweiten Gierratenabweichungsschwellenwert verglichen wird, wenn eine Übersteuersituation in dem Modul 205 des ESP-Systems erkannt worden ist. Wird dabei festgestellt, dass der Betrag der Gierratenabweichung $\Delta\dot{\psi}$ größer als der zweite Gierratenabweichungsschwellenwert ist, so wird die ESP-Übersteuerfunktion aktiviert. Der zweite Gierratenabweichungsschwellenwert wird dabei vorzugsweise adaptiv an die Fahrzeugreferenzgeschwindigkeit $v_{ref}$ sowie an den Schätzwert $\hat{\mu}$ des Fahrbahnreibwertes angepasst, wobei der Gierratenabweichungsschwellenwert mit steigender Fahrzeugreferenzgeschwindigkeit $v_{ref}$ und/oder mit sinkendem Wert $\hat{\mu}$ verringert wird. Zudem ist der zweite Gierratenabweichungsschwellenwert größer als der erste Gierratenabweichungsschwellenwert, welcher zur Erkennung einer Übersteuersituation herangezogen wird.

Ferner wird ermittelt, wann ein Bremsen- oder Motor-Eingriff beendet werden soll, wozu Vergleiche zwischen den erfassten und ermittelten Fahrzustandsgrößen und vorgegebenen Austrittsschwellenwerten durchgeführt werden. Darüber hinaus wird auf der Basis des vorliegenden Motormoments (actual engine torque) des Antriebsmotors 102, dem durch den Fahrer angeforderten Motormoment (driver requested engine torque) sowie dem Reibmoment des Motors (engine friction torque) bestimmt, ob und in welcher Weise die Bremsen- und Motoreingriffe vorgenommen werden sollen.

Als Ausgangssignale des Aktivierungsmoduls 209 ergeben sich ein Ausgangssignal brake on/off, mit dem das Einstellen der in dem Regelungsmodul 208 ermittelten Bremsmomente $M_{Brems,soll}$ freigeschaltet bzw. blockiert wird, sowie ein Ausgangssignal engine on/off, mit dem das Einstellen des in dem Regelungsmodul 208 ermittelte Motormoments $M_{Motor,soll}$ freigeschaltet bzw. blockiert wird. Als weitere Ausgangssignale des Aktivierungsmoduls 209 ergeben sich ein Austrittschwellenwert $\Delta\dot{\psi}_{th,out}$ für die Gierratenabweichung $\Delta\dot{\psi}$ und ein Austrittschwellenwert $\dot{\beta}_{Th,out}$ für die Schwimmwinkelgeschwindigkeit $\dot{\beta}$, sowie der Lenkwinkel $\delta_{calc}$ und eine das Motormoment des Antriebsmotors 102 repräsentierende Größe $M_{Mot,info}$, welche ebenfalls in dem Regelungsmodul 208 berücksichtigt werden.

Mittels des Aktivierungsmoduls 209 werden somit insbesondere eine ESP-Übersteuerfunktion und eine ESP-Untersteuerfunktion aktiviert, bei denen in einer Obersteuersituation Bremseneingriffe und in einer Untersteuersituation Bremsen- und Motoreingriffe zur Stabilisierung des Fahrzeugs 101 vorgenommen werden, wobei anhand der Ausgangssignale brake on/off und engine on/off ermittelt werden kann, ob die ESP-Übersteuerfunktion bzw. die ESP-Untersteuerfunktion aktiviert ist.

Insoweit entspricht das in der Figur 2 dargestellte ESP-System mit den Blöcken 202 bis 209 dem ESP-System 105, bei der in der Figur 1 dargestellten Ausführungsform der Erfindung. Zusätzlich zu den Blöcken 202 bis 209 enthält das ESP-System 104 bei der in der Figur 1 dargestellten Ausführungsform der Erfindung das bereits beschriebene Bewertungsmodul 107, welchem zusätzlich zu dem in dem Steuergerät 104 ermittelte Soll-Sperrmoment $M_{Sperr,soll}$ der Lenkwinkel $\delta_{wheel}$ an den lenkbaren Rädern des Fahrzeugs 101, die gemessene Gierrate $\dot{\psi}$ des Fahrzeugs 101, die Ergebnisse der in dem ESP-System 104 durchgeführten Fahrsituationserkennung sowie die Ausgangssignale brake on/off und engine on/off als Eingangssignale zugeführt werden.

Bei der in der Figur 2 dargestellten Ausführungsform wird die Steuerung der Differenzialsperre 103 vollständig durch das ESP-System durchgeführt. Dazu enthält das ESP-System, wie in der Figur 2 dargestellt, das Steuerungsmodul 201, in dem ein Soll-Sperrmoment $M_{Sperr,soll}$ der Differenzialsperre 103 bestimmt wird. Die Funktionen des Steuergerätes 104 und des Bewertungsmoduls 107, bei in der Figur 1 dargestellten Ausführungsform der Erfindung werden bei der in der Figur 2 dargestellten Ausführungsform der Erfindung durch das Steuerungsmodul 201 ausgeführt. Dieses kann dabei ebenfalls eine Regeleinheit enthalten, in der das Soll-Sperrmoment $M_{Sperr,soll}$ in Abhängigkeit von der Raddrehzahldifferenz der Antriebsräder des Fahrzeugs 101 ermittelt wird. Vorzugsweise enthält das Steuerungsmodul 201 jedoch einen weiteren Gierratenregler, der in Abhängigkeit von der Gierratenabweichung $\Delta\dot{\psi}$, welche die Regeldifferenz für diesen Regler darstellt, ein Soll-Sperrmoment $M_{Sperr,soll}$ der Differenzialsperre 103 ermittelt. Auf diese Weise kann in bestimmten Fahrsituationen durch eine Ansteuerung der Differenzialsperre 103 ein Giermoment erzeugt werden, welches die Gierratenabweichung verringert und somit die Fahrstabilität des Fahrzeugs 101 erhöht. Dabei ist es vorgesehen, dass in dem Steuerungsmodul 201 fortwährend ein Soll-Sperrmoment $M_{Sperr,soll}$ berechnet wird, und eine Bewertungseinheit des Steuerungsmoduls 201 das Einstellen des Soll-Sperrmoments $M_{Sperr,soll}$ in Abhängigkeit von der vorliegenden Fahrsituation freischaltet oder blockiert, wobei bei einer Blockierung ein Sperrgrad von Null in der Differenzialsperre 103 eingestellt wird.

Die im Rahmen der Erfindung vorgesehene Strategie zur Ansteuerung der Differenzialsperre 103, die in beiden dargestellten Ausführungsformen der Erfindung in ähnlicher Weise vorgenommen wird, wird nun im Folgenden erläutert:

Die vorgesehene Strategie basiert auf der Feststellung, dass die Stabilität des Fahrzustandes des Fahrzeugs 101 in bestimmten Übersteuersituationen sowie in Untersteuersituationen dadurch verbessert werden kann, dass in der Differenzialsperre 103 ein Sperrgrad von Null eingestellt wird, während die Stabilität des Fahrzustandes in anderen Übersteuersituationen durch das Einstellen eines von Null verschiedenen Sperrgrades in der Differenzialsperre 103 erhöht werden kann.

Dabei hat sich gezeigt, dass in Übersteuersteuersituationen, in denen von dem Fahrer während der Fahrt durch eine Kurve ein hohes Antriebsmoment des Antriebsmotors 102 mittels des Fahrpedals angefordert wird, um das Fahrzeugs 101 zu beschleunigen, ein Sperrgrad von Null in der elektronischen Differenzialsperre 103 einzustellen ist.

In einer derartigen Fahrsituation, auf die im Folgenden auch als Situation 1 Bezug genommen wird, kommt es aufgrund der während der Kurvenfahrt auftretenden Fliehkräfte zu einer Verringerung der Radlast des kurveninneren Antriebsrades, wodurch sich der Radschlupf an diesem Antriebsrad erhöht bzw. das Rad durchzudrehen beginnt und somit die an diesem Rad bewirkte Seitenführungskraft reduziert wird. In der Folge muss der weitaus größere Anteil der Seitenführungskraft an der Antriebsachse an dem kurvenäußeren Rad aufgebracht werden. Bei offener Differenzialsperre 103, d.h. bei Vorliegen eines Sperrgrades von Null in der Differenzialsperre 103, wird die von dem kurvenäußeren Antriebsrad übertragene Antriebskraft auf den Wert begrenzt, welcher von dem kurveninneren Antriebsrad übertragen werden kann, was in diesen Situationen zur Stabilisierung des Fahrzustandes beiträgt. Bei einer Erhöhung des Sperrgrades der Differenzialsperre 103 würde die an dem kurvenäußeren Rad wirkende Antriebskraft erhöht, so dass die Gefahr besteht, dass auch dieses Rad durchzudrehen beginnt, wodurch die an diesem Rad angreifende Seitenführungskraft ebenfalls verringert wird und es in der Folge zu einem Ausbrechen des Fahrzeugs 101 kommen würde. Um dies zu verhindern, ist es vorgesehen, in einer solchen Situation einen Sperrgrad von Null in der Differenzialsperre 103 einzustellen.

Kommt es zu einem übersteuern des Fahrzeugs 101, während der Fahrer bei einer Kurvenfahrt kein oder nur ein geringes Antriebsmoment mittels des Fahrpedals von dem Antriebsmotor 102 anfordert, d.h. das Fahrzeug 101 nicht in Vorwärtsrichtung beschleunigt wird, so wird bei einem von Null verschiedenen Sperrgrad der Differenzialsperre 103 die Antriebskraft an dem kurvenäußeren Antriebsrad, welches eine höhere Drehzahl aufweist als das kurveninnere Antriebsrad, gegenüber der an dem kurveninneren Antriebsrad wirkenden Antriebskraft verringert. Hierdurch wird ein Giermoment erzeugt, welches dem Übersteuern des Fahrzeugs 101 entgegen wirkt. In dieser Situation, die im Folgenden auch als Situation 2 bezeichnet wird, ist es daher vorgesehen, dass eine Steuerung des Sperrgrades der Differenzialsperre 103 mittels des Steuergerätes 104 oder mittels des in das ESP-Systems integrierten Steuerungsmoduls 201 vorgenommen wird, wobei hier im Hinblick auf das Zusammenwirken der Ansteuerung der Differenzialsperre 103 und der ESP-Übersteuerfunktion zwischen Fahrzeugen 101 mit Hinterachsantrieb und Fahrzeugen 101 mit Vorderachsantrieb zu unterscheiden ist.

Durch das ESP-System wird, wie zuvor bereits erwähnt, bei einem Übersteuern das kurvenäußere Vorderrad des Fahrzeugs 101 abgebremst. Bei Fahrzeugen 101 mit Hinterachsantrieb unterstützen sich dabei der ESP-Eingriff an der Vorderachse und die Erhöhung des Sperrgrades der Differenzialsperre 103, und beide Eingriffe können gleichzeitig vorgenommen werden. Bei Fahrzeugen mit Vorderachsantrieb stören bzw. neutralisieren sich der ESP-Eingriff und die Erhöhung des Sperrgrades der Differenzialsperre jedoch gegenseitig, da bei einem Abbremsen des kurvenäußeren Antriebsrades bei einem von Null verschiedenen Sperrgrad der Differenzialsperre 103 auch das kurveninnere Antriebsrad abgebremst werden würde. Daher ist vorgesehen, dass bei Fahrzeugen 101 mit Vorderachsantrieb in einer Übersteuersituation nur dann ein von Null verschiedener Sperrgrad in der Differenzialsperre 103 eingestellt wird, wenn die ESP-Obersteuerfunktion nicht aktiviert ist, d.h. kein ESP-Bremseneingriff vorgenommen wird.

Auf diese Weise kann das Fahrzeug 101 in einer Übersteuersituation durch eine Ansteuerung der Differenzialsperre 103 stabilisiert werden, so dass ein ESP-Bremseneingriff, der für den Fahrer in der Regel sehr unkomfortabel ist, oftmals vermieden werden kann.

In einer Untersteuersituation würde eine Erhöhung des Sperrgrades der Differenzialsperre 103 im Falle, dass der Fahrer kein oder nur ein geringes Motormoment mittels des Fahrpedals von dem Antriebsmotor 102 anfordert, so dass das Fahrzeug 101 nicht in Vorwärtsrichtung beschleunigt wird, ebenfalls das kurvenäußere Antriebsrad abgebremst, wobei das Untersteuern hierdurch jedoch verstärkt wird. Daher ist es vorgesehen, dass in einer solchen Situation, die im Folgenden auch als Situation 3 bezeichnet wird, ein Sperrgrad von Null in der Differenzialsperre 103 eingestellt, bzw. die Differenzialsperre 103 geöffnet wird.

Darüber hinaus wurde festgestellt, dass das Fahrzeug 101 in einer Untersteuersituation, in welcher der Fahrer während der Kurvenfahrt ein hohes Antriebsmoment von dem Antriebsmotor 102 anfordert und das Fahrzeug 101 in Vorwärtsrichtung beschleunigt, nur sehr schwierig bzw. gar nicht durch eine Ansteuerung der elektronischen Differenzialsperre 103 stabilisiert werden kann. Daher ist es in einer solchen Situation, die im Folgenden auch als Situation 4 bezeichnet wird, ebenfalls vorgesehen, einen Sperrgrad von Null in der Differenzialsperre 103 einzustellen bzw. die Differenzialsperre 103 zu öffnen.

Die dargestellte Strategie zur Ansteuerung der elektronischen Differenzialsperre 103 ist zusammenfassend schematisch in der folgenden Tabelle aufgeführt:

|  | Fahrzeug untersteuert | Fahrzeug übersteuert |
|---|---|---|
| Fahrpedal = 0 | Differenzialsperre öffnen (Situation 3) | Geregelte Vorgabe des Sperrgrades (Situation 2) |
| Fahrpedal » 0 | Differenzialsperre öffnen (Situation 4) | Differenzialsperre öffnen (Situation 1) |

Zusätzlich ist bei Fahrzeugen 101 mit Vorderachsantrieb in der Situation 2 vorgesehen, dass eine geregelte Vorgabe des Sperrgrades der Differenzialsperre 103 nur dann erfolgt, wenn die ESP-Übersteuerfunktion nicht aktiviert ist, was in der Tabelle nicht dargestellt ist.

Zur Erkennung der zuvor dargestellten Situationen 1 bis 4, werden die Ergebnisse der in dem ESP-System innerhalb des Moduls 205 durchgeführten Erkennung von Übersteuersituationen und Untersteuersituationen herangezogen. Es hat sich jedoch gezeigt, dass eine besonders zuverlässige Erkennung und Bewertung dieser Situationen in Abhängigkeit von einer Schräglaufwinkeldifferenz $\Delta\alpha$ zwischen dem Schräglaufwinkel $\alpha_f$ der Räder an der Vorderachse des Fahrzeugs 101 und den dem Schräglaufwinkel $\alpha_r$ der Räder an der Hinterachse des Fahrzeugs 101 durchgeführt werden kann. Insbesondere die Situation 1, in welcher das Fahrzeug 101 während einer Kurvenfahrt, bei welcher der Fahrer ein hohes Antriebsmoment des Antriebsmotors 102 anfordert, übersteuert, kann dabei besonders zuverlässig insbesondere anhand der Schräglaufwinkeldifferenz $\Delta\alpha$ erkannt werden.

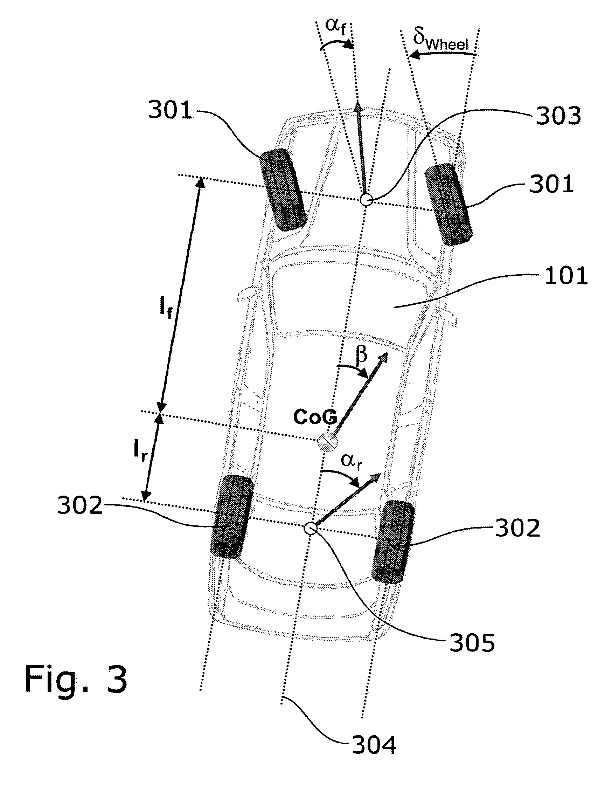

Der Schräglaufwinkel eines Rades ist dabei als derjenige Winkel definiert, der zwischen der Bewegungsrichtung des Radmittelpunktes und der Schnittgeraden der Rad- und der Fahrbahnebene auftritt. Der Schräglaufwinkel $\alpha_f$ der Räder 301 an der Vorderachse, der Schräglaufwinkel $\alpha_r$ der Räder 302 an der Hinterachse des Fahrzeugs 101 sind dabei in der Figur 3 veranschaulicht. Dabei insbesondere die im Rahmen der Erfindung verwendete Orientierung der Winkel, aus denen sich deren Vorzeichen ergibt, aus der Figur 3 entnommen werden. Unter Verwendung des bekannten linearen Einspurmodells ergibt sich dabei für den Schräglaufwinkel der Räder 301 an der Vorderachse:

$$\alpha_f = -\delta_{wheel} + \beta + \frac{l_f}{v_x}\dot{\psi} \qquad\qquad \cdot \ (1),$$

wobei mit $v_x$ die Komponente der Fahrzeuggeschwindigkeit $v_{ref}$ in Längsrichtung und mit $l_f$ der in der Figur 3 ebenfalls veranschaulichte Abstand zwischen dem Mittelpunkt 303 der Vorderachse und dem Schwerpunkt CoG des Fahrzeugs 101 bezeichnet ist.

Bei dem Winkel $\beta$ handelt es sich um den Schwimmwinkel zwischen der Fahrzeuglängsachse 304 und der Bewegungsrichtung des Fahrzeugs, der ebenfalls in der Figur 3 veranschaulicht ist. Entsprechend ist der Schwimmwinkel $\beta$ durch den Ausdruck

$$\beta = \arctan\frac{v_y}{v_x}$$

gegeben, wobei mit $v_y$ die Komponente der Fahrzeuggeschwindigkeit quer zur Fahrzeuglängsachse 304 bezeichnet ist. Der Schwimmwinkel bzw. die Komponenten $v_x$ und $v_y$ sind dabei einer direkten Messung mittels eines Fahrzeugsensors nicht zugänglich.

Der Schräglaufwinkel $\alpha_r$ der Räder 302 an der Hinterachse des Fahrzeugs 101 ist unter Zugrundelegung des linearen Einspurmodells gegeben durch

$$\alpha_r = \beta - \frac{l_r}{v_x}\dot{\psi} \qquad\qquad (2),$$

wobei mit $l_r$ der Abstand des Hinterachsmittelpunktes von dem Schwerpunkt CoG des Fahrzeugs bezeichnet ist.

Aus den Gleichungen (1) und (2) lässt sich dabei die Schräglaufwinkeldifferenz $\Delta\alpha = \alpha_f - \alpha_r$ ermitteln. Zur Auswertung wird ferner in einer Näherung die Komponente $v_x$ der Fahrzeuggeschwindigkeit durch die Fahrzeugreferenzgeschwindigkeit $v_{ref}$ ersetzt, so dass gilt:

$$\Delta\alpha = -\delta_{wheel} + \frac{l}{v_{ref}}\dot{\psi} \qquad\qquad (3)$$

Der Parameter $l=l_f+l_r$ ist dabei der Radstand des Fahrzeugs 101, d.h. der Abstand zwischen den Mittelpunkten 303, 305 der Vorderachse und der Hinterachse des Fahrzeugs 101. Wie anhand von Gleichung (3) ersichtlich, ist die Schräglaufwinkeldifferenz $\Delta\alpha$ somit aus Größen ermittelbar, die mit Hilfe vom Fahrzeugsensoren erfassbar sind, bzw. bei denen es sich um bauartbedingte Parameter des Fahrzeugs 101 handelt.

In Abhängigkeit von Schwellenwerten für die Schräglaufwinkeldifferenz $\Delta\alpha$ sowie in Abhängigkeit von dem Vorzeichen der Gierrate $\dot{\psi}$ werden im Rahmen der Erfindung anhand der Schräglaufwinkeldifferenz $\Delta\alpha$ Obersteuersituationen sowie Untersteuersituationen erkannt, wobei im Folgenden von einem Schräglauf-Übersteuern die Rede sein wird, wenn anhand der Schräglaufwinkeldifferenz ein Übersteuern des Fahrzeugs 101 festgestellt wird, und wobei im Folgenden von einem Schräglauf-Untersteuern die Rede sein wird, wenn ein Untersteuern des Fahrzeugs 101 anhand der Schräglaufwinkeldifferenz $\Delta\alpha$ festgestellt wird.

In einer bevorzugten Ausführungsform der Erfindung wird dabei ein Schräglauf-Übersteuern erkannt, wenn gilt:

$$(\dot{\psi} > 0 \quad \textbf{und} \quad \Delta\alpha > S_{Ov})$$

$$\textbf{oder}$$

$$(\dot{\psi} < 0 \quad \textbf{und} \quad \Delta\alpha < -S_{Ov})$$

Insbesondere wird dabei ein Schräglauf-Übersteuern in einer Linkskurve erkannt, wenn $\dot{\psi}>0$ und $\Delta\alpha>S_{Ov}$ gilt, da das Vorzeichen der Gierrate $\dot{\psi}$ so gewählt ist, dass diese in einer Linkskurve des Fahrzeugs positiv ist, und es wird ein Schräglauf-Übersteuern in einer Rechtskurve erkannt, wenn $\dot{\psi}<0$ und $\Delta\alpha<-S_{Ov}$ gilt, da das Vorzeichen der Gierrate $\dot{\psi}$ so gewählt ist, dass diese in einer Rechtskurve des Fahrzeugs negativ ist.

Der Übersteuerschwellenwert $S_{Ov}$ ist dabei positiv und liegt zwischen 2˚ und 10˚, vorzugsweise bei 5˚. In einer vorteilhaften Ausführungsform der Erfindung kann der Übersteuerschwellenwert $S_{Ov}$ zudem in Abhängigkeit von weiteren Größen, insbesondere in Abhängigkeit von der Fahrzeugreferenzgeschwindigkeit $v_{ref}$ oder in Abhängigkeit von dem Schätzwert $\hat{\mu}$ des Fahrbahnreibwertes ermittelt werden.

Ein Schräglauf-Untersteuern wird in einer bevorzugten Ausführungsform der Erfindung erkannt, wenn gilt:

$$(\dot{\psi} > 0 \quad \textbf{und} \quad \Delta\alpha < -S_{Un})$$

$$\textbf{oder}$$

$$(\dot{\psi} < 0 \quad \textbf{und} \quad \Delta\alpha > S_{Un})$$

Insbesondere wird dabei ein Schräglauf-Untersteuern in einer Linkskurve erkannt, wenn $\dot{\psi}>0$ und $\Delta\alpha<-S_{Un}$ gilt, und es wird ein Schräglauf-Untersteuern in einer Rechtskurve erkannt, wenn $\dot{\psi}<0$ und $\Delta\alpha > S_{Un}$ gilt.

Der Untersteuerschwellenwert $S_{Un}$ ist dabei positiv und liegt zwischen 2˚ und 10˚, vorzugsweise bei 5˚. In einer vorteilhaften Ausführungsform der Erfindung kann der Untersteuerschwellenwert $S_{Ov}$ zudem in Abhängigkeit von weiteren Größen, insbesondere in Abhängigkeit von der Fahrzeuggeschwindigkeit $v_{ref}$ oder in Abhängigkeit von dem Schätzwert $\hat{\mu}$ des Fahrbahnreibwertes ermittelt werden.

Bei der in der Figur 1 dargestellten Ausführungsform der Erfindung, bei der das Soll-Sperrmoment $M_{Sperr,soll}$ der Differenzialsperre 103 in der beschriebenen Weise in dem Steuerungsmodul 104 ermittelt wird, wird dabei eine Bewertung der Fahrsituation, insbesondere die Erkennung eines Schräglaufübersteuerns bzw. eines Schräglaufuntersteuerns, innerhalb des Bewertungsmoduls 107 vorgenommen.

Entsprechend der erkannten und bewerteten Fahrsituation wird dann in Abhängigkeit von dem Soll-Sperrmoment $M_{Sperr,soll}$ ein Zusatz-Sperrmoment $\Delta M_{Sperr,soll}$ bestimmt. Vor dem Eingang der Differenzialsperre 103 wird, wie zuvor erläutert, eine Arbitrierung der Soll-Sperrmomente $M_{Sperr,soll}$ und $\Delta M_{Sperr,soll}$ in Form einer Summenbildung an der Summationsstelle 108 vorgenommen.

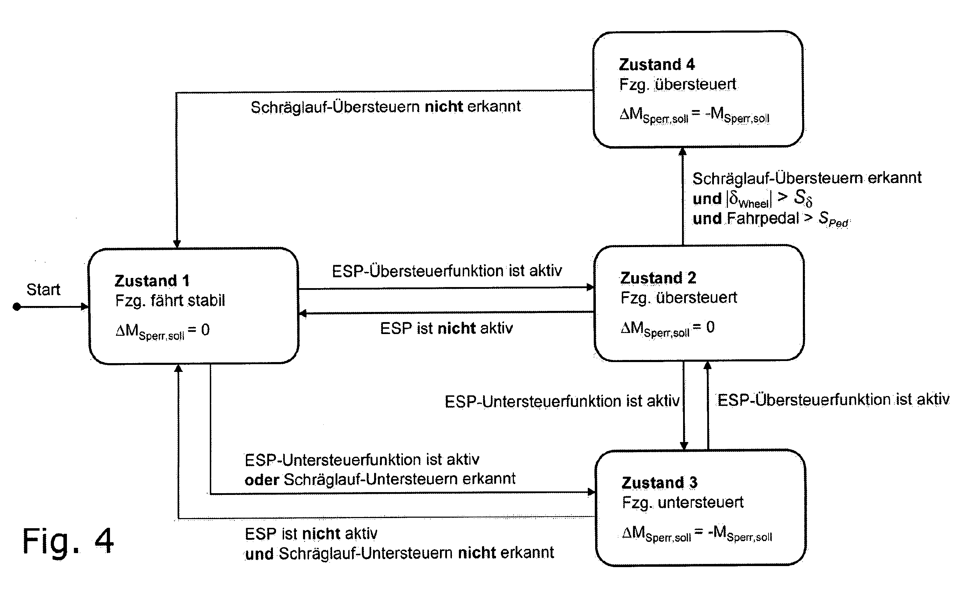

Die Ermittlung des Zusatz-Sperrmoments $\Delta M_{Sperr,soll}$ in dem Bewertungsmodul 107 bei der in der Figur 1 dargestellten Ausführungsform der Erfindung für ein Fahrzeug 101 mit Hinterachsantrieb ist in der Figur 4 anhand eines Zustandsdiagramms veranschaulicht.

Insbesondere ist es dabei vorgesehen, dass in dem Bewertungsmodul 107 des ESP-Systems 105 in der beschriebenen Weise ein Schräglauf-Übersteuern sowie ein Schräglauf-Untersteuern erkannt wird. Zur Ansteuerung der Differenzialsperre 103 werden ferner die Ergebnisse der Situationserkennung in dem Modul 205 des ESP-Systems herangezogen, sowie die Ausgangssignale brake on/off sowie engine on/off des Aktivierungsmoduls 209 des ESP-Systems, aus denen insbesondere ermittelbar ist, ob in einer Untersteuersituation und/oder in einer Übersteuersituation ein ESP-Eingriff vorgenommen wird. Ferner wird in dem Bewertungsmodul 107 das Signal driver requested engine torque ausgewertet, welches der Fahrpedalstellung entspricht.

Ein Zustand 1 wird dann angenommen, wenn weder die ESP-Übersteuerfunktion noch die ESP-Untersteuerfunktion aktiv ist und wenn weder ein Schräglauf-Untersteuern noch ein Schräglauf-Übersteuern erkannt wird. In diesem Fall ist der Fahrzustand des Fahrzeugs 101 stabil, und in dem Bewertungsmodul 107 wird ein Zusatz-Sperrmoment von $\Delta M_{Sperr,soll}$ =0 berechnet. Somit entspricht das Summen-Soll-Sperrmoment $M_{Sperr,soll,Summe}$ dem in dem Steuergerät 104 ermittelten Soll-Sperrmoment $M_{Sperr,soll}$.

Wird in dem ESP-System 105 ein Übersteuern des Fahrzeugs 101 erkannt und die ESP-Übersteuerfunktion aktiviert, so erfolgt ein Übergang in den Zustand 2. In diesem Falle liegt die Situation 2 vor, in der das Fahrzeug 101 übersteuert, der Fahrer jedoch nur ein geringes Antriebsmoment von dem Motor 102 anfordert. Wie zuvor erläutert, ist es in dieser Situation ebenfalls vorgesehen, dass in der Differenzialsperre 103 das in dem Steuergerät 104 ermittelte Soll-Sperrmoment $M_{Sperr,soll}$ eingestellt wird. Entsprechend wird in dem Bewertungsmodul 107 bei Vorliegen des Zustands 2 ein Zusatz-Sperrmoment von $\Delta M_{Sperr,soll}$=0 ermittelt. Ein Übergang von dem Zustand 2 in den zuvor beschriebenen Zustand 1 erfolgt dann, wenn innerhalb des ESP-Systems 105 erkannt wird, dass die Übersteuersituation beendet ist, und die ESP-Funktion deaktiviert wird.

Ein Übergang von dem Zustand 2 in den Zustand 4 erfolgt, wenn bei aktivierter ESP-Übersteuerfunktion ein Schräglaufwinkel-Übersteuern erkannt wird, und der Betrag des von dem Fahrer an den lenkbaren Rädern eingestellten Lenkwinkels $\delta_{wheel}$ größer als ein vorgegebener Lenkwinkelschwellenwert $S_\delta$ ist und der Pedalweg, um den Fahrpedal eingetreten ist, größer ist als ein vorgegebener Fahrpedalschwellenwert $S_{ped}$. Dabei kann es, wie bereits erwähnt, vorgesehen sein, dass die Stellung des Fahrpedals, die dem Signal driver requested engine torque entspricht, mit einem Pedalwegsensor gemessen wird, wobei beispielsweise der Winkel des Fahrpedals erfasst, oder der zurückgelegte Anteil des Pedalwegs im Bezug auf die bei vollständig eingetretenem Fahrpedal vorliegende Vollgasstellung ermittelt wird. Der Zustand 4 entspricht dabei der Situation 4, in der das Fahrzeug übersteuert und der Fahrer während der Kurvenfahrt ein hohes Antriebsmoment von dem Antriebsmotor 102 des Fahrzeugs 101 anfordert und das Fahrzeugs 101 beschleunigt. Wie zuvor erläutert, wird in dieser Situation ein Sperrgrad von Null in der Differenzialsperre 103 eingestellt. Dafür wird in dem Bewertungsmodul 107 ein Zusatz-Sperrmoment von $\Delta M_{Sperr,soll}$ =-$M_{Sperr,soll}$ berechnet, so dass sich ein Summen-Soll-Sperrmoment von $M_{Sperr,soll,Summe}$ = 0 ergibt. Ein Übergang von dem Zustand 4 in den Zustand 1 erfolgt, wenn ein Schräglauf-Übersteuern in dem Bewertungsmodul 107 nicht mehr erkannt wird.

Ausgehend von Zustand 1 erfolgt ferner ein Übergang in einen Zustand 3, wenn in dem ESP-System 105 eine Untersteuersituation erkannt und die ESP-Untersteuerfunktion aktiviert worden ist oder wenn in dem Bewertungsmodul 107 ein Schräglauf-Untersteuern erkannt worden ist. Bei aktivierter ESP-Übersteuerfunktion, d.h. ausgehend von dem Zustand 2, erfolgt ein Übergang in den Zustand 3, wenn in dem ESP-System 105 eine Untersteuersituation erkannt und die ESP-Untersteuerfunktion aktiviert worden ist. Der Zustand 3 entspricht dabei den Situationen 1 und 3, d.h. dem Vorliegen einer Untersteuersituation. Da es auch in dieser Situation, wie zuvor beschrieben, vorgesehen ist, dass ein Sperrgrad von Null in der Differenzialsperre 103 eingestellt wird, wird in dem Zustand 3 ebenfalls ein Zusatz-Sperrmoment von $\Delta M_{Sperr,soll}$ =-$M_{Sperr,soll}$ in dem Bewertungsmodul 107 berechnet, so dass sich ein Summen-Soll-Sperrmoment von $M_{Sperr,soll,Summe}$ =0 ergibt und die Differenzialsperre 103 geöffnet wird.

Ein Übergang von dem Zustand 3 in den Zustand 1 erfolgt, wenn innerhalb des ESP-Systems 105 festgestellt wird, dass die Untersteuersituation beendet ist, dass die ESP-Funktion deaktiviert und wenn zusätzlich kein Schräglauf-Untersteuern mehr erkannt wird. Ferner erfolgt ausgehend von dem Zustand 3 ein Übergang in den Zustand 2, wenn in dem ESP-System 105 eine Obersteuersituation erkannt und die ESP-Übersteuerfunktion aktiviert wird.

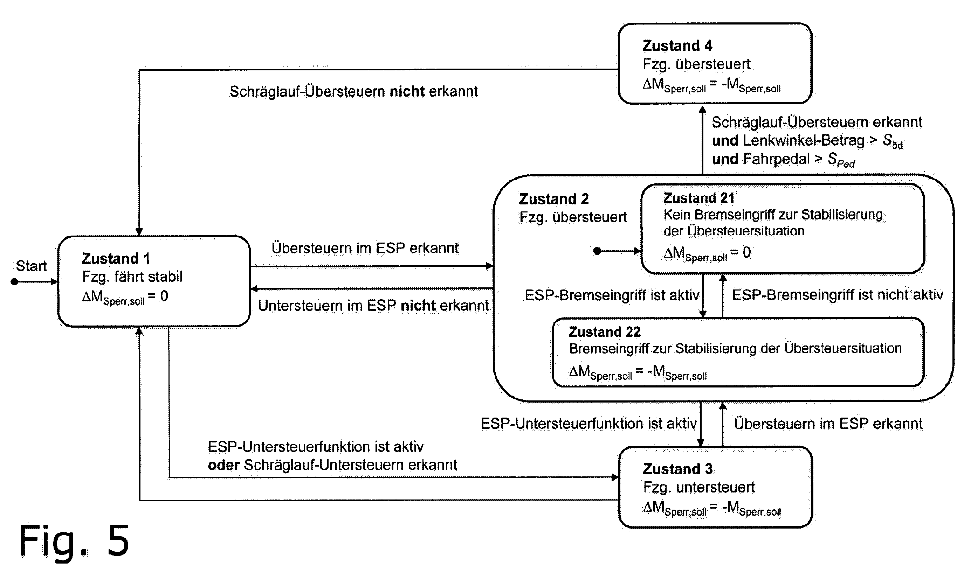

Bei einem Fahrzeug 101 mit Vorderachsantrieb ist es, wie zuvor erläutert, vorgesehen, dass in einer Übersteuersituation, in welcher das kurvenäußere Vorderrad des Fahrzeugs 101 durch das ESP-System mit einer Bremskraft beaufschlagt wird, ein Sperrgrad von Null in der Differenzialsperre 103 eingestellt wird. Die Ermittlung des Zusatz-Sperrmoments $\Delta M_{Sperr,soll}$ in dem Bewertungsmodul 107 bei der in der Figur 1 dargestellten Ausführungsform der Erfindung für ein Fahrzeug 101 mit Vorderachsantrieb ist dabei in der Figur 5 anhand eines Zustandsdiagramms veranschaulicht.

Ausgehend von dem Zustand 1, welcher dem in der Figur 4 dargestellten Zustand 1 mit einem stabilen Fahrverhalten des Fahrzeugs 101 entspricht, erfolgt dabei ein Übergang in den Zustand 2, wenn in dem ESP-System 105 in der zuvor beschriebenen Weise eine Übersteuersituation erkannt worden ist, wobei der Zustand 2 hier in einen Unterzustand 21 und einen Unterzustand 22 untergliedert ist. Die Unterzustände 22 und 21 entsprechen dabei den Fällen das in der zuvor beschriebenen Situation eine ESP-Bremseneingriff vorgenommen wird bzw. dass eine ESP-Bremseingriff nicht vorgenommen wird.

Nach einem Übergang von dem Zustand 1 in den Zustand 2 wird dabei zunächst der Unterzustand 21 angenommen, welcher einer Übersteuersituation entspricht, in der von dem Fahrer des Fahrzeugs 101 nur ein geringes Antriebsmoment von dem Antriebsmotor 102 angefordert wird und in der kein ESP-Bremseneingriff vorgenommen wird. Wie zuvor erläutert, ist es in dieser Situation ebenfalls vorgesehen, dass in der Differenzialsperre 103 das in dem Steuergerät 104 ermittelte Soll-Sperrmoment $M_{Sperr,soll}$ eingestellt wird. Entsprechend wird in dem Bewertungsmodul 107 bei Vorliegen des Unterzustandes 21 ein Zusatz-Sperrmoment von $\Delta M_{Sperr,soll}=0$ ermittelt. Ein Übergang von dem Unterzustand 21 in den Unterzustand 22 des Zustands 2 erfolgt dann, wenn anhand des Signals brake on/off festgestellt wird, dass die ESP-Übersteuerfunktion aktiviert ist und ein ESP-Bremseingriff vorgenommen wird. In diesem Fall wird die Differenzialsperre 103 wie zuvor erläutert geöffnet, wozu in dem Bewertungsmodul 107 ein Zusatz-Sperrmoment von $\Delta M_{Sperr,soll} = -M_{Sperr,soll}$ berechnet wird. Falls sich das Bewertungsmodul 107 in dem Unterzustand 22 befindet und anhand des Signals brake on/off erkannt wird, dass kein ESP-Bremseneingriff mehr vorgenommen wird, so erfolgt ein Übergang in den Unterzustand 21.

Die Übergänge von den Unterzuständen 21 und 22 des Zustands 2 in die Zustände 1, 3 und 4 entsprechen den in der Figur 4 dargestellten und zuvor erläuterten Übergängen von dem in der Figur 4 veranschaulichten Zustand 2 in die in Figur 4 dargestellten Zustände 1, 3 und 4. Dabei kann ein Übergang in die Zustände 1, 3 und 4 sowohl ausgehend von dem Zustand 21 als auch von Zustand 22 erfolgen, wenn die bereits angegebenen und erläuterten Bedingungen für einen Übergang von dem Zustand 2 in einen der Zustände 1, 3 und 4 erfüllt sind.

Bei der in der Figur 2 dargestellten Ausführungsform der Erfindung, bei der die Steuerfunktion zur Ansteuerung der Differenzialsperre vollständig in das ESP-System integriert ist, wird grundsätzlich die gleiche Ansteuerstrategie verfolgt, wie bei der in der Figur 1 dargestellten Ausführungsform der Erfindung, bei der die Steuerungsfunktion zur Ansteuerung der elektronischen Differenzialsperre 103 in einem von dem ESP-System getrennten Steuergerät 104 untergebracht ist.

Insbesondere ist es bei der in der Figur 2 dargestellten Ausführungsform der Erfindung vorgesehen, dass in der Bewertungseinheit des Steuerungsmodul 201 des ESP-Systems in der bereits beschriebenen Weise ein Schräglauf-Übersteuern sowie ein Schräglauf-Untersteuern erkannt wird. Zur Ansteuerung der Differenzialsperre 103 werden ferner die Ergebnisse der Situationserkennung in dem Modul 205 des ESP-Systems herangezogen, sowie die Ausgangssignale brake on/off sowie engine on/off des Aktivierungsmoduls 209 des ESP-Systems, aus denen insbesondere ermittelbar ist, ob in einer Untersteuersituation und/oder in einer Übersteuersituation ein ESP-Eingriff vorgenommen wird. Ferner wird in der Bewertungseinheit des Steuerungsmodul 201 das Signal driver requested engine torque ausgewertet, welches der Fahrpedalstellung entspricht.

Wird dabei in dem Steuergerät 201 ein Schräglaufuntersteuern erkannt, oder wird anhand der Ergebnisse der in dem Modul 205 des ESP-Systems vorgenommenen Situationserkennung festgestellt, dass eine Untersteuersituation vorliegt, so wird in dem Steuerungsmodul 201 ein Soll-Sperrmoment von $M_{Sperr,Soll}= 0$ ermittelt, so dass in der Differenzialsperre 103 ein Sperrgrad von Null eingestellt wird.

Bei einem Fahrzeug 101 mit Hinterachsantrieb ist es bei der in der Figur 2 dargestellten Ausführungsform der Erfindung vorgesehen, dass ein von Null verschiedenes Soll-Sperrmoment $M_{Sperr,Soll}$ der Differenzialsperre 103 in dem Steuerungsmodul 201 bzw. in der Regeleinheit des Steuerungsmoduls 201 ermittelt und mittels der Bewertungseinheit des Steuerungsmoduls 201 eingestellt wird, wenn in dem Modul 205 des ESP-Systems eine Übersteuersituation festgestellt wird. Hierdurch wird ein das Fahrzeug 101 stabilisierendes Giermoment erzeugt. Wird zusätzlich festgestellt, dass ein Schräglauf-Übersteuern vorliegt, dass der Lenkwinkel $\delta_{wheel}$ an den lenkbaren Rädern des Fahrzeugs größer als der vorgegebene Lenkwinkelschwellenwert $S_\delta$ ist und dass der Pedalweg, um den der Fahrer das Fahrpedal eingetreten hat, größer ist als der vorgegebene Fahrpedalschwellenwert $S_{ped}$, so wird ein Soll-Sperrmoment von $M_{Sperr,Soll}=0$ ermittelt und eingestellt, wodurch die Differenzialsperre 103 geöffnet wird.

Bei einem Fahrzeug 101 mit Vorderachsantrieb ist es bei der in der Figur 2 dargestellten Ausführungsform der Erfindung vorgesehen, dass in einer Übersteuersituation zunächst ein von Null verschiedenes Soll-Sperrmoment

$M_{Sperr,Soll}$ in dem Steuerungsmodul 201 bzw. in der Regeleinheit des Steuerungsmoduls 201 bestimmt und in der Differenzialsperre 103 eingestellt wird. Zusätzlich wird bei Vorliegen einer Übersteuersituation jedoch überprüft, ob mittels des Aktivierungsmoduls 209 die ESP-Übersteuerfunktion aktiviert und damit das kurvenäußere Vorderrad des Fahrzeugs 101 mit einer Bremskraft beaufschlagt wird. Ist dies der Fall, so wird in dem Steuerungsmodul 201 ein Soll-Sperrmoment von $M_{Sperr,Soll} = 0$ ermittelt und in der Differenzialsperre 103 eingestellt. Wird in einer Übersteuersituation zusätzlich festgestellt, dass ein Schräglauf-Übersteuern vorliegt, dass der Lenkwinkel $\delta_{wheel}$ an den lenkbaren Rädern des Fahrzeugs größer als der vorgegebene Lenkwinkelschwellenwert $S_\delta$ ist und dass der Pedalweg, um den der Fahrer das Fahrpedal eingetreten hat, größer ist als der vorgegebene Fahrpedalschwellenwert $S_{ped}$, so wird auch bei einem Fahrzeug 101 mit Vorderachsantrieb ein Soll-Sperrmoment von $M_{Sperr,Soll} = 0$ ermittelt und eingestellt, wodurch die Differenzialsperre 103 geöffnet wird.

**Patentansprüche**

1. Verfahren zum Steuern des Sperrgrades einer elektronisch steuerbaren Differenzialsperre in einer angetriebenen Achse eines Fahrzeugs, überprüft wird, ob ein Antriebsrad an der angetriebenen Achse durch einen Fahrdynamikregler gesteuert abgebremst wird, und dass ein Sperrgrad von Null in der Differenzialsperre eingestellt wird, wenn festgestellt wird, dass ein Antriebsrad an der angetriebenen Achse durch den Fahrdynamikregler gesteuert abgebremst wird, und wobei solange kein Bremseneingriff an einem Antriebsrad des Fahrzeugs vorgenommen wird, bis der Fahrzustand durch eine Ansteuerung der Differenzialsperre stabilisiert wird, dergestalt, dass in einer Übersteuersituation ein Sperrgrad von Null in der Differenzialsperre eingestellt wird, wenn zusätzlich erkannt wird, dass ein Pedalweg, um den ein Fahrpedal des Fahrzeugs eingetreten ist, größer ist als ein vorgegebener Fahrpedalschwellenwert und dass in einer Übersteuersituation ein von Null verschiedener Sperrgrad in der Differenzialsperre eingestellt wird, wenn zusätzlich erkannt wird, dass ein Pedalweg, um den ein Fahrpedal des Fahrzeugs eingetreten ist, kleiner oder gleich ist als ein vorgegebener Fahrpedalschwellenwert.

2. Verfahren nach Anspruch 1,
**dadurch gekennzeichnet,**
**dass** eine Übersteuersituation erkannt wird, wenn folgende Bedingungen erfüllt sind:

   - eine Fahrzeuggeschwindigkeit ist größer als ein vorgegebener Schwellenwert,
   - ein Vorzeichen eines Lenkwinkels an einem lenkbaren Rad des Fahrzeugs entspricht dem Vorzeichen einer Differenz $\dot{\psi}-\dot{\psi}_{Soll}$ zwischen einer gemessenen Gierrate $\dot{\psi}$ des Fahrzeugs und einer in einem Fahrzeugreferenzmodell ermittelten Soll-Gierrate $\dot{\psi}_{Soll}$ und
   - der Betrag der Differenz $\dot{\psi}-\dot{\psi}_{Soll}$ zwischen der gemessenen Gierrate $\dot{\psi}$ des Fahrzeugs und der in einem Fahrzeugreferenzmodell ermittelten Soll-Gierrate $\dot{\psi}_{Soll}$ ist größer als ein vorgegebener erster Gierratenabweichungsschwellenwert.

3. Verfahren nach einem der vorangegangenen Ansprüche,
**dadurch gekennzeichnet,**
**dass** der Sperrgrad der Differenzialsperre mittels der Regeleinheit in Abhängigkeit von einer Differenz zwischen Raddrehzahlen der Antriebsräder des Fahrzeugs ermittelt wird.

4. Verfahren nach einem der vorangegangenen Ansprüche,
**dadurch gekennzeichnet,**
**dass** der Sperrgrad der Differenzialsperre mittels der Regeleinheit in Abhängigkeit von einer Differenz zwischen einer gemessenen Gierrate des Fahrzeugs und einer in einem Fahrzeugreferenzmodell anhand eines von dem Fahrer eingestellten Lenkwinkels an dem lenkbaren Rad des Fahrzeugs und einer von dem Fahrer des Fahrzeugs eingestellten Fahrzeuggeschwindigkeit ermittelten Soll-Gierrate bestimmt wird.

5. Verfahren nach einem der vorangegangenen Ansprüche,
**dadurch gekennzeichnet,**
**dass** eine Übersteuersituation erkannt wird, wenn eine Schräglaufwinkeldifferenz zwischen einem Schräglaufwinkel an einem Vorderrad und an einem Hinterrad des Fahrzeugs bei Vorliegen einer positiven Gierrate des Fahrzeugs größer als ein vorgegebener positiver Übersteuerschwellenwert ist oder wenn die Schräglaufwinkeldifferenz bei Vorliegen einer negativen Gierrate des Fahrzeugs kleiner als ein vorgegebener negativer Übersteuerschwellenwert ist.

**6.** Verfahren nach Anspruch 5,
**dadurch gekennzeichnet,**
**dass** der positive und der negative Übersteuerschwellenwert den gleichen Betrag aufweisen.

**7.** Verfahren nach Anspruch 5,
**dadurch gekennzeichnet,**
**dass** die Schräglaufwinkeldifferenz $\Delta\alpha$ aus einem Lenkwinkel $\delta_{wheel}$ eines lenkbaren Rades des Fahrzeugs, einer Geschwindigkeit $v_{ref}$ des Fahrzeugs, einer Gierrate $\dot{\psi}$ des Fahrzeugs und einem Radstand $l$ des Fahrzeugs bestimmt wird, wobei gilt:

$$\Delta\alpha = -\delta_{wheel} + \frac{l}{v_{ref}}\dot{\psi}$$

**8.** Verfahren nach einem der Ansprüche 5 bis 7,
**dadurch gekennzeichnet,**
**dass** in einer Übersteuersituation zusätzlich überprüft wird, ob der Betrag des Lenkwinkels an dem lenkbaren Rad des Fahrzeugs größer als ein vorgegebener Lenkwinkelschwellenwert ist.

**9.** Verfahren nach einem der vorangegangenen Ansprüche,
**dadurch gekennzeichnet,**
**dass** ein Rad des Fahrzeugs durch einen Fahrdynamikregler gesteuert abgebremst wird, wenn in einer Übersteuersituation festgestellt wird, dass der Betrag der Differenz $\dot{\psi}$-$\dot{\psi}_{Soll}$ zwischen der gemessenen Gierrate $\dot{\psi}$ des Fahrzeugs und der in einem Fahrzeugreferenzmodell ermittelten Soll-Gierrate $\dot{\psi}_{Soll}$ größer als ein vorgegebener zweiter Gierratenabweichungsschwellenwert ist.

**10.** Verfahren nach Anspruch 9,
**dadurch gekennzeichnet,**
**dass** der zweite Gierratenabweichungsschwellenwert größer als der erste Gierratenabweichungsschwellenwert ist.

**11.** Verfahren nach einem der vorangegangenen Ansprüche,
**dadurch gekennzeichnet,**
**dass** der Fahrdynamikregler in einer Übersteuersituation das Abbremsen eines kurvenäußeren Vorderrades steuert.

**12.** Vorrichtung zum Steuern eines Sperrgrades einer elektronisch steuerbaren Differenzialsperre in einer angetriebenen Achse eines Fahrzeugs, umfassend eine Regeleinheit, in der ein Sperrgrad der Differenzialsperre bestimmbar ist, einen Fahrdynamikregler, mittels welchem ein Rad des Fahrzeugs mit einer Bremskraft beaufschlagbar ist, wobei eine Bewertungseinheit vorgesehen ist, in der überprüfbar ist, ob ein Antriebsrad an der angetriebenen Achse durch einen Fahrdynamikregler gesteuert abgebremst wird, und
dass die Bewertungseinheit einen Sperrgrad von Null in der Differenzialsperre einstellt, wenn ein Antriebsrad an der angetriebenen Achse durch den Fahrdynamikregler gesteuert abgebremst wird und wobei
solange kein Bremseneingriff an einem Antriebsrad des Fahrzeugs vorgenommen wird, bis der Fahrzustand durch eine Ansteuerung der Differenzialsperre stabilisiert wird, dergestalt,
dass die Bewertungseinheit in einer Übersteuersituation einen Sperrgrad von Null in der Differenzialsperre einstellt, wenn zusätzlich erkannt wird, dass ein Pedalweg, um den ein Fahrpedal des Fahrzeugs eingetreten ist, größer ist als ein vorgegebener Fahrpedalschwellenwert und dass die Bewertungseinheit in einer Übersteuersituation einen von Null verschiedenen Sperrgrad berechnet und in der Differenzialsperre einstellt, wenn zusätzlich erkannt wird, dass ein Pedalweg, um den ein Fahrpedal des Fahrzeugs eingetreten ist, kleiner oder gleich ist als ein vorgegebener Fahrpedalschwellenwert.

**13.** Vorrichtung nach Anspruch 12,
**dadurch gekennzeichnet,**
**dass** die Regeleinheit in einem Steuergerät enthalten ist, wobei ein Einstellen des in der Regeleinheit ermittelten Soll-Sperrgrads in der Differenzialsperre mittels der Bewertungseinheit blockierbar ist, wodurch ein Sperrgrad von Null in der elektronisch steuerbaren Differenzialsperre einstellbar ist.

**14.** Vorrichtung nach einem der Ansprüche 12 oder 13,

**dadurch gekennzeichnet,**
**dass** die Bewertungseinheit ein Bestandteil eines Systems zur Durchführung eines elektronischen Stabilitätsprogramms ist.

**15.** Vorrichtung nach einem der Ansprüche 12 bis 14,
**dadurch gekennzeichnet,**
**dass** die Regeleinheit und die Bewertungseinheit Bestandteil eines Systems zur Durchführung eines elektronischen Stabilitätsprogramms sind.

**16.** Vorrichtung nach einem der Ansprüche 12 bis 15,
**dadurch gekennzeichnet,**
**dass** der Fahrdynamikregler ein Bestandteil eines Systems zur Durchführung eines elektronischen Stabilitätsprogramms ist.

**Claims**

**1.** Method for controlling the degree of locking of an electronically controllable differential lock in a driven axle of a vehicle, wherein it is checked whether a driven wheel on the driven axle is braked under the control of a vehicle movement dynamics controller, and in that a degree of locking of zero is set in the differential lock if it is detected that a driven wheel on the driven axle is braked under the control of the vehicle movement dynamics controller, and wherein no braking intervention is performed at a driven wheel of the vehicle until the driving state is stabilized by actuation of the differential lock, such that in an over-steering situation a degree of locking of zero is set in the differential lock if it is additionally detected that a pedal travel, by which an accelerator pedal of the vehicle is depressed, is greater than a predefined accelerator pedal threshold value, and
in that in an over-steering situation a degree of locking which is different from zero is set in the differential lock if it is additionally detected that a pedal travel by which an accelerator pedal of the vehicle is depressed is less than or equal to a predefined accelerator pedal threshold value.

**2.** Method according to Claim 1,
**characterized**
**in that** an over-steering situation is detected if the following conditions are met:

- a vehicle speed is higher than a predefined threshold value,
- a sign of a steering angle at a steerable wheel of the vehicle corresponds to the sign of a difference $\psi$ - $\psi_{setp}$ between a measured yaw rate $\psi$ of the vehicle and a setpoint yaw rate $\psi$ setp which is determined in a vehicle reference model and
- the absolute value of the difference $\psi$ - $\psi_{setp}$ between the measured yaw rate $\psi$ of the vehicle and the setpoint yaw rate $\psi_{setp}$ which is determined in a vehicle reference model is greater than a predefined first yaw rate deviation threshold value.

**3.** Method according to one of the preceding claims,
**characterized**
**in that** the degree of locking of the differential lock is determined by means of the control unit as a function of a difference between wheel speeds of the driven wheels of the vehicle.

**4.** Method according to one of the preceding claims,
**characterized**
**in that** the degree of locking of the differential lock is determined by means of the control unit as a function of a difference between a measured yaw rate of the vehicle and a setpoint yaw rate which is determined in a vehicle reference model on the basis of a steering angle which is set by the driver at the steerable wheel of the vehicle and a vehicle speed which is set by the driver of the vehicle.

**5.** Method according to one of the preceding claims,
**characterized**
**in that** an over-steering situation is detected if a slip angle difference between a slip angle at a front wheel and a slip angle at a rear wheel of the vehicle when a positive yaw rate of the vehicle is present is greater than a predefined positive over-steering threshold value or if the slip angle difference when a negative yaw rate of the vehicle is present is smaller than a predefined negative over-steering threshold value.

6. Method according to Claim 5,
   **characterized**
   **in that** the positive and negative over-steering threshold values have the same absolute value.

7. Method according to Claim 5,
   **characterized**
   **in that** the slip angle difference $\Delta\alpha$ is determined from a steering angle $\delta_{wheel}$ of a steerable wheel of the vehicle, a velocity $v_{ref}$ of the vehicle, a yaw rate $\psi$ of the vehicle and a wheel base $l$ of the vehicle, wherein the following applies:

$$\Delta\alpha = -\delta_{wheel} + \frac{l}{v_{ref}}\dot{\psi}$$

8. Method according to one of Claims 5 to 7,
   **characterized**
   **in that** in an over-steering situation it is additionally checked whether the absolute value of the steering angle at the steerable wheel of the vehicle is greater than a predefined steering angle threshold value.

9. Method according to one of the preceding claims,
   **characterized**
   **in that** a wheel of the vehicle is braked under the control of a vehicle movement dynamics controller if it is detected in an over-steering situation that the absolute value of the difference $\dot{\psi} - \dot{\psi}_{setp}$ between the measured yaw rate $\dot{\psi}$ of the vehicle and the setpoint yaw rate $\dot{\psi}_{setp}$ which is determined in a vehicle reference model is greater than a predefined second yaw rate deviation threshold value.

10. Method according to Claim 9,
    **characterized**
    **in that** the second yaw rate deviation threshold value is greater than the first yaw rate deviation threshold value.

11. Method according to one of the preceding claims,
    **characterized**
    **in that** in an over-steering situation the vehicle movement dynamics controller controls the braking of a front wheel on the outside of the bend.

12. Device for controlling a degree of locking of an electronically controllable differential lock in a driven axle of a vehicle, comprising a control unit in which a degree of locking of the differential lock can be determined, a vehicle movement dynamics controller by means of which the braking force can be applied to a wheel of the vehicle, wherein an evaluation unit is provided in which it can be checked whether a driven wheel on the driven axle is braked under the control of a vehicle movement dynamics controller, and
    in that the evaluation unit sets a degree of locking of zero in the differential lock if a driven wheel on the driven axle is braked under the control of the vehicle movement dynamics controller, and wherein
    no braking intervention is performed at a driven wheel of the vehicle until the driving state is stabilized by actuation of the differential lock such that
    in an over-steering situation the evaluation unit sets a degree of locking of zero in the differential lock if it is additionally detected that a pedal travel, by which an accelerator pedal of the vehicle is depressed, is greater than a predefined accelerator pedal threshold value, and in that in an over-steering situation the evaluation unit calculates a degree of locking which is different from zero and sets said degree of locking in the differential lock if it is additionally detected that a pedal travel by which an accelerator pedal of the vehicle is depressed is less than or equal to a predefined accelerator pedal threshold value.

13. Device according to Claim 12,
    **characterized**
    **in that** the control unit is contained in a controller device, wherein a setting of the setpoint degree of locking in the differential lock, which is determined in the control unit, can be blocked by means of the evaluation unit, as a result of which a degree of locking of zero can be set in the electronically controllable differential lock.

**14.** Device according to one of Claims 12 or 13,
**characterized**
**in that** the evaluation unit is a component of a system for carrying out an electronic stability programme.

**15.** Device according to one of Claims 12 to 14,
**characterized**
**in that** the control unit and the evaluation unit are components of a system for carrying out an electronic stability programme.

**16.** Device according to one of Claims 12 to 15,
**characterized**
**in that** the vehicle movement dynamics controller is a component of a system for carrying out an electronic stability programme.

**Revendications**

**1.** Procédé pour commander le degré de blocage d'un bloqueur de différentiel à commande électronique dans un essieu entraîné d'un véhicule, selon lequel un contrôle est effectué pour vérifier si une roue motrice sur l'essieu entraîné est freinée de manière commandée par un régulateur de la dynamique de conduite, et qu'un degré de blocage nul est réglé dans le bloqueur de différentiel s'il est constaté qu'une roue motrice sur l'essieu entraîné est freinée de manière commandée par le régulateur de la dynamique de conduite, et selon lequel aucune intervention de freinage n'a lieu sur une roue motrice du véhicule jusqu'à ce que la situation de conduite soit stabilisée par une commande du bloqueur de différentiel, de telle sorte
que dans une situation de survirage, un degré de blocage égal à zéro est réglé dans le bloqueur de différentiel s'il est en plus détecté qu'une course de pédale de laquelle a été enfoncée une pédale des gaz du véhicule est supérieure à une valeur de seuil de pédale des gaz prédéfinie et
que dans une situation de survirage, un degré de blocage différent de zéro est réglé dans le bloqueur de différentiel s'il est en plus détecté qu'une course de pédale de laquelle a été enfoncée une pédale des gaz du véhicule est inférieure ou égale à une valeur de seuil de pédale des gaz prédéfinie.

**2.** Procédé selon la revendication 1, **caractérisé en ce qu'**une situation de survirage est détectée lorsque les conditions suivantes sont réunies :

   - une vitesse du véhicule est supérieure à une valeur de seuil prédéfinie,
   - un signe d'un angle de direction sur une roue orientable du véhicule correspond au signe d'une différence $\psi-\psi_{Soll}$ entre un taux de lacet $\psi$ mesuré du véhicule et un taux de lacet de consigne $\psi_{Soll}$ déterminé dans un modèle de référence du véhicule et
   - la valeur de la différence $\psi-\psi_{Soll}$ entre le taux de lacet $\psi$ mesuré du véhicule et le taux de lacet de consigne $\psi_{Soll}$ déterminé dans le modèle de référence du véhicule est supérieure à une première valeur de seuil d'écart de taux de lacet prédéfinie.

**3.** Procédé selon l'une des revendications précédentes, **caractérisé en ce que** le degré de blocage du bloqueur de différentiel est déterminé au moyen de l'unité de régulation en fonction d'une différence entre les vitesses de rotation de roue des roues motrices du véhicule.

**4.** Procédé selon l'une des revendications précédentes, **caractérisé en ce que** le degré de blocage du bloqueur de différentiel est déterminé au moyen de l'unité de régulation en fonction d'une différence entre un taux de lacet mesuré du véhicule et un taux de lacet de consigne déterminé dans un modèle de référence du véhicule au moyen d'un angle de direction réglé par le conducteur sur la roue orientable du véhicule et une vitesse de véhicule réglée par le conducteur du véhicule.

**5.** Procédé selon l'une des revendications précédentes, **caractérisé en ce qu'**une situation de survirage est détectée lorsqu'une différence d'angle de dérive entre un angle de dérive au niveau d'une roue avant et au niveau d'une roue arrière du véhicule, en présence d'un taux de lacet positif du véhicule, est supérieure à une valeur de seuil de survirage positive prédéfinie ou lorsque la différence d'angle de dérive, en présence d'un taux de lacet négatif du véhicule, est inférieure à une valeur de seuil de survirage négative prédéfinie.

**6.** Procédé selon la revendication 5, **caractérisé en ce que** les valeurs de seuil de survirage positive et négative présentent la même valeur absolue.

**7.** Procédé selon la revendication 5, **caractérisé en ce que** la différence d'angle de dérive $\Delta\alpha$ est déterminée à partir d'un angle de direction $\delta_{wheel}$ d'une roue orientable du véhicule, d'une vitesse $v_{ref}$ du véhicule, d'un taux de lacet $\psi$ du véhicule et d'un empattement 1 du véhicule, avec :

$$\Delta\alpha = -\delta_{wheel} + \frac{l}{v_{ref}}\Psi$$

**8.** Procédé selon l'une des revendications 5 à 7, **caractérisé en ce que** dans une situation de survirage, un contrôle est en plus effectué pour vérifier si la valeur absolue de l'angle de direction au niveau de la roue orientable du véhicule est supérieure à une valeur de seuil d'angle de direction prédéfinie.

**9.** Procédé selon l'une des revendications précédentes, **caractérisé en ce qu'**une roue du véhicule est freinée de manière commandée par un régulateur de la dynamique de conduite si, dans une situation de survirage, il est constaté que la différence $\psi$-$\psi_{Soll}$ entre le taux de lacet $\psi$ mesuré du véhicule et le taux de lacet de consigne $\psi_{Soll}$ déterminé dans un modèle de référence du véhicule est supérieure à une deuxième valeur de seuil d'écart de taux de lacet prédéfinie.

**10.** Procédé selon la revendication 9, **caractérisé en ce que** la deuxième valeur de seuil d'écart de taux de lacet est supérieure à la première valeur de seuil d'écart de taux de lacet.

**11.** Procédé selon l'une des revendications précédentes, **caractérisé en ce que** dans une situation de survirage, le régulateur de la dynamique de conduite commande le freinage d'une roue avant à l'extérieur du virage.

**12.** Dispositif pour commander un degré de blocage d'un bloqueur de différentiel à commande électronique dans un essieu entraîné d'un véhicule, comprenant une unité de régulation dans laquelle peut être déterminé un degré de blocage du bloqueur de différentiel, un régulateur de la dynamique de conduite au moyen duquel une force de freinage peut être appliquée à une roue du véhicule, une unité d'interprétation étant prévue, dans laquelle il peut être vérifié si une roue motrice sur l'essieu entraîné est freinée de manière commandée par un régulateur de la dynamique de conduite et
que l'unité d'interprétation règle un degré de blocage nul dans le bloqueur de différentiel lorsqu'une roue motrice sur l'essieu entraîné est freinée de manière commandée par le régulateur de la dynamique de conduite, et dans lequel aucune intervention de freinage n'a lieu sur une roue motrice du véhicule jusqu'à ce que la situation de conduite soit stabilisée par une commande du bloqueur de différentiel, de telle sorte
que l'unité d'interprétation, dans une situation de survirage, règle un degré de blocage égal à zéro dans le bloqueur de différentiel s'il est en plus détecté qu'une course de pédale de laquelle a été enfoncée une pédale des gaz du véhicule est supérieure à une valeur de seuil de pédale des gaz prédéfinie et
que l'unité d'interprétation, dans une situation de survirage, calcule un degré de blocage différent de zéro et le règle dans le bloqueur de différentiel s'il est en plus détecté qu'une course de pédale de laquelle a été enfoncée une pédale des gaz du véhicule est inférieure ou égale à une valeur de seuil de pédale des gaz prédéfinie.

**13.** Dispositif selon la revendication 12, **caractérisé en ce que** l'unité de régulation se trouve dans un contrôleur, un réglage du degré de blocage de consigne déterminé dans l'unité de régulation dans le bloqueur de différentiel pouvant être bloqué au moyen de l'unité d'interprétation, un degré de blocage égal à zéro pouvant être réglé dans le bloqueur de différentiel à commande électronique.

**14.** Dispositif selon l'une des revendications 12 ou 13, **caractérisé en ce que** l'unité d'interprétation est un composant d'un système destiné à exécuter un programme de stabilité électronique.

**15.** Dispositif selon l'une des revendications 12 à 14, **caractérisé en ce que** l'unité de régulation et l'unité d'interprétation sont les composants d'un système destiné à exécuter un programme de stabilité électronique.

**16.** Dispositif selon l'une des revendications 12 à 15, **caractérisé en ce que** le régulateur de la dynamique de conduite est un composant d'un système destiné à exécuter un programme de stabilité électronique.

Fig. 1

Fig. 2

EP 1 799 484 B1

**Fig. 3**

**Zustand 4**
Fzg. übersteuert

$\Delta M_{Sperr,soll} = -M_{Sperr,soll}$

Schräglauf-Übersteuern **nicht** erkannt

Schräglauf-Übersteuern erkannt
**und** $|\delta_{Wheel}| > S_\delta$
**und** Fahrpedal $> S_{Ped}$

Start

**Zustand 1**
Fzg. fährt stabil

$\Delta M_{Sperr,soll} = 0$

ESP-Übersteuerfunktion ist aktiv

ESP ist **nicht** aktiv

**Zustand 2**
Fzg. übersteuert

$\Delta M_{Sperr,soll} = 0$

ESP-Untersteuerfunktion ist aktiv

ESP-Übersteuerfunktion ist aktiv

ESP-Untersteuerfunktion ist aktiv
**oder** Schräglauf-Untersteuern erkannt

**Zustand 3**
Fzg. untersteuert

$\Delta M_{Sperr,soll} = -M_{Sperr,soll}$

ESP ist **nicht** aktiv
**und** Schräglauf-Untersteuern **nicht** erkannt

Fig. 4

**Zustand 4**
Fzg. übersteuert
$\Delta M_{Sperr,soll} = -M_{Sperr,soll}$

Schräglauf-Übersteuern **nicht** erkannt

Schräglauf-Übersteuern erkannt
**und** Lenkwinkel-Betrag > $S_{\delta d}$
**und** Fahrpedal > $S_{Ped}$

**Zustand 2**
Fzg. übersteuert

**Zustand 21**
Kein Bremseingriff zur Stabilisierung der Übersteuersituation
$\Delta M_{Sperr,soll} = 0$

Start

**Zustand 1**
Fzg. fährt stabil
$\Delta M_{Sperr,soll} = 0$

Übersteuern im ESP erkannt

Untersteuern im ESP **nicht** erkannt

ESP-Bremseingriff ist aktiv

ESP-Bremseingriff ist nicht aktiv

**Zustand 22**
Bremseingriff zur Stabilisierung der Übersteuersituation
$\Delta M_{Sperr,soll} = -M_{Sperr,soll}$

ESP-Untersteuerfunktion ist aktiv

Übersteuern im ESP erkannt

ESP-Untersteuerfunktion ist aktiv
**oder** Schräglauf-Untersteuern erkannt

**Zustand 3**
Fzg. untersteuert
$\Delta M_{Sperr,soll} = -M_{Sperr,soll}$

Fig. 5

EP 1 799 484 B1

**EP 1 799 484 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DD 294078 A5
- DE 10248090 A
- DE 10303984 A
- DE 19515051 A1
- DE 19515015 A1